# EUROPEAN PATENT APPLICATION

(11) **EP 4 513 971 A1**
(43) Date of publication of application: **26.02.2025**
(21) Application number: 22937960.7
(22) Date of filing: 22.04.2022
(51) Int. Cl.: H04W 48/16

(54) **WIRELESS COMMUNICATION METHOD AND APPARATUS, AND DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: RGTH
(86) International application number: PCT/CN2022/088571
(87) International publication number: WO 2023/201724

(57) **Abstract**

Embodiments of the present application provide a wireless communication method and apparatus, and device, and the method includes: a zero-power-consumption station (STA) being indicated by an access point (AP) whether to receive a data part of a first physical layer protocol data unit (PPDU) frame.

## Description

### TECHNICAL FIELD

The embodiments of the present application relate to the field of mobile communication technologies, and in particular, to a wireless communication method, a device, and an equipment.

### BACKGROUND

During the process of wireless fidelity (WiFi) communications, transmission and reception of signals are determined based on a local clock. A local clock of a station (STA) is also periodically aligned with an access point (AP) to ensure that the timing between the STA and the AP is consistent (that is, time synchronization is maintained), so that data is transmitted and received at corresponding time. For the zero-power-consumption STA, the precision of local timing is poor, and the function of timing synchronization with the AP cannot be accurately maintained. As a result, accurate transmission and reception of information cannot be achieved.

### SUMMARY

Embodiments of the present application provide a wireless communication method and apparatus, and device.

A wireless communication method provided in embodiments of the present application includes:
a zero-power-consumption station (STA) being indicated by an access point (AP) whether to receive a data part of a first physical layer protocol data unit (PPDU) frame.

A wireless communication method provided in embodiments of the present application includes:
indicating, by an access point (AP), a zero-power-consumption station (STA) whether to receive a data part of a first physical layer protocol data unit (PPDU) frame.

A wireless communication method provided in embodiments of the present application includes:
receiving, by a zero-power-consumption station (STA), second information sent by an access point (AP), the second information being used to indicate an arrival of a first window.

A wireless communication method provided in embodiments of the present application includes:
sending, by an access point (AP), second information to a zero-power-consumption station (STA), the second information being used to indicate an arrival of a first window.

A wireless communication apparatus provided in embodiments of the present application is applied to a zero-power-consumption station (STA), and the apparatus includes:
a first communication unit, configured to be indicated by an access point (AP) whether to receive a data part of a first physical layer protocol data unit (PPDU) frame.

A wireless communication apparatus provided in embodiments of the present application is applied to an access point (AP), and the apparatus includes:
a second communication unit, configured to indicate a zero-power-consumption station (STA) whether to receive a data part of a first physical layer protocol data unit (PPDU) frame.

A wireless communication apparatus provided in embodiments of the present application is applied to a zero-power-consumption station (STA), and apparatus includes:
a third communication unit, configured to receive second information sent by an access point (AP), the second information being used to indicate an arrival of a first window.

A wireless communication apparatus provided in embodiments of the present application is applied to an access point (AP), and the apparatus includes:
a fourth communication unit, configured to send second information to a zero-power-consumption station (STA), the second information being used to indicate an arrival of a first window.

A communication device provided in embodiments of the present application may be the zero-power-consumption STA in the above solutions or the AP in the above solutions, and the communication device includes a processor and a memory. The memory is configured to store a computer program, and the processor is configured to call and run the computer program stored in the memory to perform the above wireless communication method.

A chip provided in embodiments of the present application is configured to implement the above wireless communication method.

Specifically, the chip includes a processor, configured to call and run a computer program from a memory, to cause a device installed with the chip to perform the above wireless communication method.

A computer-readable storage medium provided in embodiments of the present application is configured to store a computer program, and the computer program causes a computer to perform the above wireless communication method.

A computer program product provided in embodiments of the present application includes computer program instructions, and the computer program instructions cause a computer to perform the above wireless communication method.

A computer program provided in embodiments of the present application, when run on a computer, causes the computer to perform the above wireless communication method.

With the above technical solutions, the AP indicates the zero-power-consumption STA whether to receive the data part of the first PPDU frame, and correct reception of data is achieved in a scenario where the zero-power-consumption STA does not need to maintain accurate time synchronization with the AP.

### BRIEF DESCRIPTION OF THE DRAWINGS

The accompanying drawings described here are used to provide further understanding of the present application and constitute a part of the present application. The illustrative embodiments of the present application and their descriptions are used to explain the present application and do not constitute improper limitations on the present application. In the accompanying drawings.
FIG. 1 is a schematic diagram showing an application scenario, in accordance with embodiments of the present application.
FIG. 2 is a schematic diagram showing an optional scenario of zero power consumption communication, in accordance with embodiments of the present application.
FIG. 3 is a schematic diagram showing an optional scenario of backscatter communication, in accordance with embodiments of the present application.
FIG. 4 is a schematic diagram showing an optional structure of a radio frequency energy module, in accordance with embodiments of the present application.
FIG. 5 is a schematic diagram showing an optional structure of a zero-power-consumption terminal, in accordance with embodiments of the present application.
FIG. 6 is a schematic diagram showing an optional frame structure of a PPDU frame, in accordance with embodiments of the present application.
FIG. 7 is a schematic diagram showing an optional frame structure of a data part of a PPDU frame, in accordance with embodiments of the present application.
FIG. 8 is a schematic diagram showing an optional frame structure of a MAC header, in accordance with embodiments of the present application.
FIG. 9 is a schematic diagram showing an optional process of a wireless communication method, in accordance with embodiments of the present application.
FIG. 10 is a schematic diagram showing an optional process of a wireless communication method, in accordance with embodiments of the present application.
FIG. 11 is a schematic diagram showing an optional process of a wireless communication method, in accordance with embodiments of the present application.
FIG. 12 is a schematic diagram showing an optional frame structure of a first PPDU frame, in accordance with embodiments of the present application.
FIG. 13 is a schematic diagram showing an optional frame structure of a first PPDU frame, in accordance with embodiments of the present application.
FIG. 14 is a schematic diagram showing an optional frame structure of a first PPDU frame, in accordance with embodiments of the present application.
FIG. 15 is a schematic diagram showing an optional process of a wireless communication method, in accordance with embodiments of the present application.
FIG. 16 is a schematic diagram showing an optional process of a wireless communication method, in accordance with embodiments of the present application.
FIG. 17 is a schematic diagram showing an optional process of a wireless communication method, in accordance with embodiments of the present application.
FIG. 18 is a schematic diagram showing an optional frame structure of a second PPDU frame, in accordance with embodiments of the present application.
FIG. 19 is a schematic diagram showing an optional frame structure of a SIGNAL field of a second PPDU frame, in accordance with embodiments of the present application.
FIG. 20 is an optional schematic diagram showing a TWT mechanism, in accordance with embodiments of the present application.
FIG. 21 is a schematic diagram showing an optional frame structure of a PPDU frame, in accordance with embodiments of the present application.
FIG. 22 is a schematic diagram showing an optional frame structure of a PPDU frame, in accordance with embodiments of the present application.
FIG. 23 is a schematic diagram showing an optional application scenario of timing information, in accordance with embodiments of the present application.
FIG. 24 is a schematic diagram showing an optional frame structure of a PPDU frame, in accordance with embodiments of the present application.
FIG. 25 is a schematic diagram showing an optional application scenario of a trigger frame, in accordance with embodiments of the present application.
FIG. 26 is a schematic diagram showing an optional application scenario of a RAW, in accordance with embodiments of the present application.
FIG. 27 is a schematic diagram showing an optional application scenario of a trigger frame, in accordance with embodiments of the present application.
FIG. 28 is a schematic diagram showing an optional application scenario of a trigger frame, in accordance with embodiments of the present application.
FIG. 29 is a schematic diagram showing an optional application scenario of a trigger frame, in accordance with embodiments of the present application.
FIG. 30 is a schematic diagram showing an optional structure of a wireless communication device, in accordance with embodiments of the present application.
FIG. 31 is a schematic diagram showing an optional structure of a wireless communication device, in accordance with embodiments of the present application.
FIG. 32 is a schematic diagram showing an optional structure of a wireless communication device, in accordance with embodiments of the present application.
FIG. 33 is a schematic diagram showing an optional structure of a wireless communication device, in accordance with embodiments of the present application.
FIG. 34 is an illustrative structural diagram of a communication equipment provided in embodiments of the present application.
FIG. 35 is an illustrative structural diagram of a chip, in accordance with embodiments of the present application.
FIG. 36 is an illustrative block diagram of a communication system provided in embodiments of the present application.

### DETAILED DESCRIPTION

The technical solutions in the embodiments of the present application will be described below with reference to the accompanying drawings of the embodiments of the present application. Obviously, the embodiments described are some rather than all of the embodiments of the present application. Based on the embodiments of the present application, all other embodiments obtained by a person of ordinary skill in the art without any creative efforts shall fall within the protection scope of the present application.

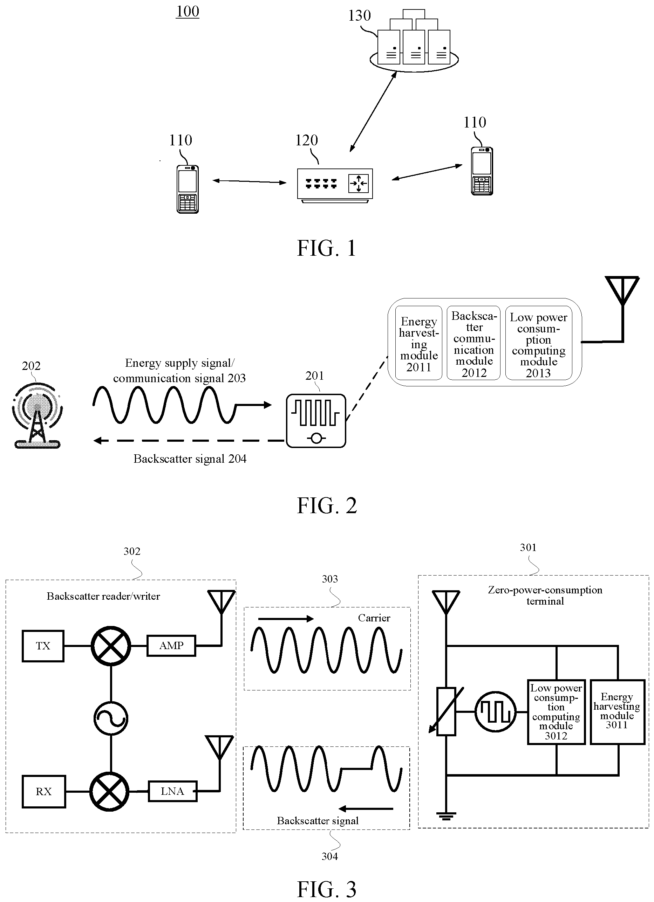

FIG. 1 is a schematic diagram showing an application scenario, in accordance with embodiments of the present application.

As shown in FIG. 1, a communication system 100 may include zero-power-consumption STAs 110 and an access point 120. The zero-power-consumption STA 110 may communicate with the access point 120 through WiFi. Multi-service transmission is supported between the zero-power-consumption STA 110 and the access point 120.

In the communication system 100 shown in FIG. 1, the access point 120 may provide communication coverage for a specific geographical area, and may communicate with the zero-power-consumption STA 110 located within the coverage area.

The access point 120 may be a relay station, an access point, a vehicle-mounted device, a wearable device, a hub, a switch, a network bridge, a router, or the like.

The zero-power-consumption STA 110 may be any terminal device that performs the zero-power-consumption. For example, the zero-power-consumption STA 110 may refer to an access terminal, a UE, a subscriber unit, a subscriber station, a mobile station, a mobile console, a remote station, a remote terminal, a mobile device, a user terminal, a terminal, a wireless communication device, a user agent, or a user apparatus. The access terminal may be a cellular phone, a cordless phone, a session initiation protocol (SIP) phone, an IoT device, a satellite handheld terminal, a wireless local loop (WLL) station, a personal digital assistant (PDA), a handheld device having a wireless communication function, a computing device or other processing device connected to a wireless modem, a vehicle-mounted device, a wearable device, a terminal device in a 5G network or a terminal device in a future evolution network, or the like.

The wireless communication system 100 may further include a network side device 130 that communicates with the access point 120. The network side device 130 may include a 5G access network device and a 5G core (5GC) network device, for example, an access and mobility management function (AMF), for another example, an authentication server function (AUSF), in yet another example, a user plane function (UPF), in still another example, a session management function (SMF). Optionally, the network side device 130 may also include an evolved packet core (EPC) device in an LTE network, for example, a session management function + core packet gateway (SMF+PGW-C) device. It should be understood that SMF+PGW-C may implement both the functions that SMF can implement and the functions that PGW-C can implement. In the evolution process of the network, the network side device may also be called other names, or new network entities may be formed by dividing the functions of the network side device, which are not limited in the embodiments of the present application.

FIG. 1 illustratively shows one AP and two zero-power-consumption STAs. Optionally, the wireless communication system 100 may include a plurality of APs, and other number of zero-power-consumption STs may be included within the coverage area of each AP, which is not limited in the embodiments of the present application.

It should be noted that, FIG. 1 only shows a system applicable to the present application in an illustrative manner, and the method described in the embodiments of the present application may also be applicable to other systems. In addition, the terms "system" and "network" herein are often used interchangeably herein. The term "and/or" herein is only an association relationship for describing associated objects, which indicates that there may be three kinds of relationships. For example, A and/or B may indicate three cases where: A exists alone, both A and B exist, and B exists alone. Furthermore, the character "/" herein generally indicates that associated objects before and after "/" are in an "or" relationship. It should also be understood that the term "indicate" involved in the embodiments of the present application may mean a direct indication or an indirect indication, or represent that there is an association relationship. For example, A indicating B may mean that A directly indicates B, e.g., that B may be obtained through A; or it may mean that A indirectly indicates B, e.g., that A indicates C, and B may be obtained through C; or it may mean that there is an association relationship between A and B. It should also be understood that the term "correspond" involved in the embodiments of the present disclosure may mean that there is a direct or indirect correspondence between two elements, or may represent an association relationship between two elements, or may represent a relationship of indicating and being indicated, configuring and being configured. It should also be understood that the term "predefined" or "predefined rules" involved in the embodiments of the present application may be achieved by pre-storing corresponding codes, tables or other manners that can be used to indicate relevant information in devices (e.g., including a zero-power-consumption STA and an AP). The specific implementation is not limited in the present application. For example, the "predefined" may refer to those defined in protocols. It should also be understood that, in the embodiments of the present application, the "protocols" may refer to standard protocols in the field of communication, which may include, for example, an LTE protocol, an NR protocol and the relevant protocol applied in the future communication system, which is not limited in the present application.

For convenience of understanding the technical solutions of the embodiments of the present application, relevant technologies of the embodiments of the present application will be described below. The following relevant technologies may be arbitrarily combined as optional solutions with the technical solutions of the embodiments of the present application, and they all belong to the protection scope of the embodiments of the present application.

### Zero-Power-Consumption Communication

In recent years, the application of zero-power-consumption terminals has become more and more widespread. A typical zero-power-consumption terminal is a radio frequency identification (RFID) tag implemented through radio frequency identification. RFID is a technology that uses spatial coupling of wireless radio frequency signals to achieve contactless automatic transmission and identification of tag information. The RFID tag is also referred to as "radio frequency tag" or "electronic tag".

The most basic RFID system includes two parts: an electronic tag (TAG) and a reader/writer. The electronic tag includes a coupling component and a chip. Each electronic tag has a unique electronic code and is placed on a target to be detected to achieve the purpose of marking the target object. The reader/writer can not only read the information on the electronic tag, but also write the information on the electronic tag, while providing the energy required for communication for the electronic tag. After entering the electromagnetic field of the reader/writer, the electronic tag receives the radio frequency signal sent by the reader/writer, and the non-initiative or passive electronic tag uses the energy obtained from the electromagnetic field generated in space to transmit the information stored in the electronic tag. The reader/writer reads and decodes the information to identify the electronic tag.

As shown in FIG. 2, an RFID system 200 includes an electronic tag 201 and a reader/writer 202. The reader/writer 202 sends an energy supply signal or a communication signal 203 to the electronic tag 201 and receives a backscatter signal 204 from the electronic tag 201.

As shown in FIG. 2, the electronic tag 201 includes an energy harvesting module 2011, a backscatter communication module 2012 and a low power consumption computing module 2013. It can be understood that the electronic tag 201 may further have a memory or a sensor, the memory is configured to store some basic information (such as electronic code), and the sensor is configured to obtain sensor data such as ambient temperature and ambient humidity.

Communication achieved based on the zero-power-consumption terminal is referred to as zero-power-consumption communication. The key technologies of the zero-power-consumption communication include backscatter communication, energy harvesting, load modulation and encoding.

First, the working principle of the backscatter communication is shown in FIG. 3. A zero-power-consumption terminal 301 receives a carrier 303 sent by a backscatter reader/writer 302, harvests energy through a radio frequency (RF) energy harvesting module 3011, then perform the function on a low power consumption computing module 3012 (also referred to as a logic module), modulates the received carrier 303 to load the information that needs to be sent, and radiates the modulated signal as a backscatter signal 304 from the antenna. This information transmission process is called the backscatter communication. A transmitter (TX) and an amplifier (AMP) of the backscatter reader/writer 302 are connected, and a receiver (RX) and a low noise amplifier (LNA) of the backscatter reader/writer 302 are connected.

Characteristics of the backscatter communication are as follows.
(1) The zero-power-consumption terminal does not actively transmit signals, and achieves the backscatter communication by modulating incoming signals;
(2) The zero-power-consumption terminal does not rely on the traditional active power amplifier transmitter, and uses a low power consumption computing unit, which greatly reduces hardware complexity;
(3) The battery-free communication can be achieved in combination with energy harvesting.

### Second, energy harvesting.

Energy harvesting is implemented by the energy harvesting module.

The energy harvesting module harvests electromagnetic wave energy in space based on the principle of electromagnetic induction, and then obtains the energy required for driving load circuits, e.g., obtaining energy for low power consumption computing, sensors, and memory reading, etc., to achieve the battery-free.

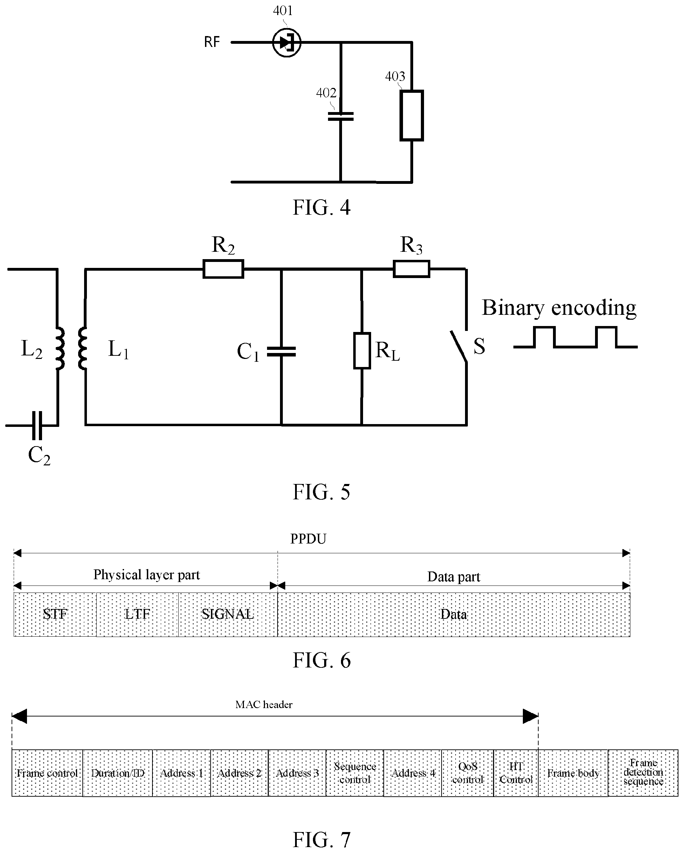

A structure of the energy harvesting module is shown in FIG. 4, which includes a diode 401, a capacitor 402, and a resistor 403, thereby harvesting the radio frequency (RF) energy in space.

Optionally, an end of the capacitor 402 connected to the diode 401 is a positive electrode.

### Third, load modulation.

Load modulation is a method which is often used by the electronic tag to transmit data to the reader/writer. The load modulation is to adjust electrical parameters of an oscillation circuit of the electronic tag according to the beat of a data stream, so as to enable a size and phase of the impedance of the electronic tag to vary accordingly, thereby completing the modulation process. There are mainly two types of load modulation technologies: resistive load modulation and capacitive load modulation.

In the resistive load modulation, as shown in FIG. 5, a load R_{L} is connected in parallel to a resistor R₃, and the resistor R₃ may be referred to as a load modulation resistor. The switch S is controlled to be turned on or off by a data stream encoded with binary data, and the on-off of R₃ can be achieved by the on-off of the switch S. As shown in FIG. 5, the zero-power-consumption terminal further includes: a resistor R₂, an inductor L₁, an inductor L₂, and a capacitor C₂. The on-off of resistor R₃ will cause the voltage of the oscillation circuit to vary, thereby achieving the amplitude shift keying (ASK) modulation, that is, signal modulation and transmission are achieved by adjusting the amplitude of the backscatter signal of the zero-power-consumption device.

Similarly, in the capacitive load modulation, a load is connected in parallel to a capacitor, and the resonant frequency of the oscillation circuit can be changed by the on-off of the capacitor, thereby achieving the frequency shift key (FSK) modulation, that is, signal modulation and transmission are achieved by adjusting the operating frequency of the backscatter signal of the zero-power-consumption terminal.

It can be seen that the zero-power-consumption terminal uses the load modulation to modulate incoming signals, thereby achieving the backscatter communication process.

### Fourth, encoding.

The data transmitted by the zero-power-consumption device may use codes of different encoding forms to represent binary "1" and "0". An encoding method generally used includes one of the following encoding methods: non return zero (NRZ) encoding, Manchester encoding, unipolar RZ encoding, differential binary phase (DBP) encoding, Miller encoding and differential encoding, etc. Using different encoding methods can be understood as using different pulse signals to represent 0 and 1.

Classification of zero-power-consumption terminals

The zero-power-consumption terminals can be classified into the following types based on the energy source and usage mode of the zero-power-consumption terminals.

### 1) Passive zero-power-consumption terminal

The zero-power-consumption terminal does not need a built-in battery. When the zero-power-consumption terminal approaches a network device, the zero-power-consumption terminal is within a near field range formed by radiation of an antenna of the network device. Therefore, the antenna of the zero-power-consumption terminal generates an induced current through electromagnetic induction, and then the induced current drives a low power consumption chip circuit of the zero-power-consumption terminal, so as to demodulate a forward link signal and modulate a backward link signal. For a backscatter link, the zero-power-consumption terminal transmits signals by means of backscatter.

Regardless of the forward link or the backward link, the passive zero-power-consumption terminal does not need the built-in battery for driving, which is a real zero-power-consumption terminal.

The passive zero-power-consumption terminal does not need the battery, so that a radio frequency circuit and a baseband circuit are very simple. For example, the passive zero-power-consumption terminal does not have a LNA, a PA, a crystal oscillator, and an analog-to-digital converter (ADC). Therefore, the passive zero-power-consumption terminal has various advantages such as small size, light weight, very cheap price, and long service life.

### 2) Semi-passive zero-power-consumption terminal

For the semi-passive zero-power-consumption terminal, the conventional battery is also not mounted, but an energy harvesting module is used to harvest radio wave energy, and the harvested energy is stored in an energy storage unit (such as a capacitor). After obtaining the energy, the energy storage unit can drive the low power consumption chip circuit of the zero-power-consumption terminal, so as to demodulate the forward link signal and modulate the backward link signal. For the backscatter link, the semi-passive zero-power-consumption terminal transmits signals by means of backscatter.

Regardless of the forward link or the backward link, the semi-passive zero-power-consumption terminal does not need the built-in battery for driving. Although energy stored in the capacitor is used during operation, the energy is derived from the radio energy harvested by the energy harvesting module. Therefore, the semi-passive zero-power-consumption terminal is also a real zero-power-consumption terminal.

The semi-passive zero-power-consumption terminal has various advantages of the passive zero-power-consumption terminal, e.g., advantages of small size, light weight, very cheap price, and long service life.

### 3) Active zero-power-consumption terminal

In some scenarios, the zero-power-consumption terminal used may also be an active zero-power-consumption terminal, and the active zero-power-consumption terminal may have a built-in battery. The battery is configured to drive the low power consumption chip circuit of the zero-power-consumption terminal, so as to demodulate the forward link signal and modulate the backward link signal. However, for the backscatter link, the active zero-power-consumption terminal transmits signals by means of backscatter. Therefore, zero power consumption of such terminal is mainly reflected in the fact that signal transmission of the backward link does not require the power of the terminal per se, but uses the backscatter manner.

The built-in battery of the active zero-power-consumption terminal supplies power to the RFID chip, so as to increase the read-write distance of the tag and improve the reliability of communication. Therefore, the active zero-power-consumption terminal may be applied in some scenarios having high requirements on communication distance and reading delay.

### Cellular passive Internet of things (IoT)

As 5G industry applications increase, the types and application scenarios of connected objects increase, and there are high requirements on the price and power consumption of communication terminals. The application of battery-free, low-cost passive IoT devices becomes a key technology for the cellular IoT, which will enrich the type and number of 5G network connection terminals and really realize the interconnection of all things. The passive IoT devices may be based on the existing zero-power-consumption terminals and extended on this basis to be applicable to the cellular IoT.

### PPDU Frame in 802.11 technology

The information of the WiFi device is transmitted based on the PPDU frame. As shown in FIG. 6, the PPDU frame includes a physical layer part and a data part. For example, the physical layer part of 802.11a/g includes a physical layer preamble and a physical layer header. The physical layer preamble includes a short training field (STF) and a long training field (LTF). The physical layer header includes a following field: SIGNAL. It can be understood that the structure of the PPDU frame includes but is not limited to the structure shown in FIG. 6.

STF consists of 10 short symbols (t1 to t10), and each symbol occupies 0.8 us. STF includes various functions mainly for realizing frame synchronization and coarse frequency synchronization. The functions of t1 to t7 include: signal detect, automatic gain control (AGC) and diversity selection, and the functions of t8 to t10 include: coarse frequency (Coarse Freq), offset estimation, and timing synchronization. LTF realizes fine frequency synchronization and channel estimation. SIGNAL carries information related to the data part, which includes: data transmission rate, data packet length information (Length), reserved bits and tail bits.

The data part of the PPDU frame carries a medium access control (MAC) frame. The frame format of the MAC frame is shown in FIG. 7, and the MAC frame includes a MAC header, a frame body part, and a frame check sequence (FCS). The MAC header includes the following fields: frame control, duration/ID, Address 1, Address 2, Address 3, sequence control, Address 4, quality of service (QoS) control, and high throughput control (HT Control).

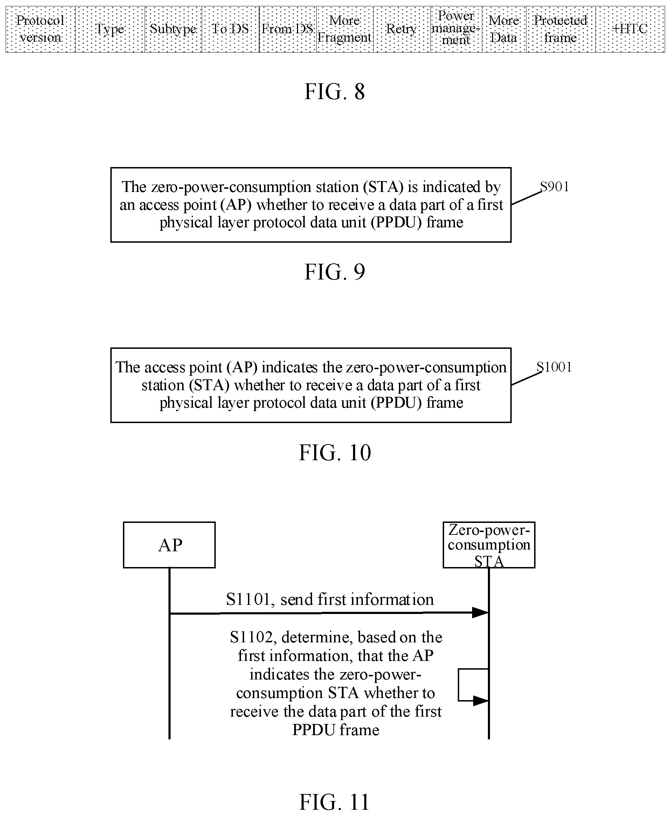

As shown in FIG. 8, the frame control field of the MAC header includes the following information:
1) protocol version: 0 or 1;
2) type:
   a) control frame, used for handshake communication and positive acknowledge during a contention period, ending a non-contention period, etc.;
   b) management frame, mainly used for negotiation and relationship control between STA and AP, e.g., association, authentication, synchronization, etc.; and
   c) data frame, used for transmitting data during the contention period and non-contention period;
3) subtype, indicating further determination of the frame type;
4) to distribution system (DS), indicating whether the frame is sent from the basic service set (BSS) to DS;
5) from DS, indicating whether the frame is sent from DS to BSS;
6) more fragment, used to indicate how a long frame is segmented and whether there are other frames, the value being set to 1 in response that there are other frames;
7) retry, indicating that the segment is a retransmission frame of the previously transmitted segment;
8) power management, indicating the power management mode adopted by the station (STA) after transmitting the frame;
9) more data, indicating that a lot of frames are buffered in the station, the value being set to 1 in response that there is at least one data frame to be sent to the STA;
10) protected frame, indicating that the frame body is encrypted based on algorithms, the value being set to 1 in response that the frame body includes data processed by keys, otherwise, set to 0; and
11) +HTC, which is an indicator bit related to the HT Control field.

The duration/ID field indicates how long the frame and its acknowledge frame will occupy the channel. The value of the duration is used for network allocation vector (NAV) calculation.

The Address field may indicate:
1) destination address;
2) source address;
3) transmitting address (TA);
4) receiving address (RA); and
5) BSS identification (ID).

The sequence control field is used to filter duplicate frames, which consists of a 12-bit sequence number representing a MAC service data unit (MSDU) or a MAC management service data unit (MMSDU) and a 4-bit fragment number representing the number of each fragment of the MSDU and MMSDU.

The QoS control field is a new added MAC layer field in 802.11e, used for priority control. This field exists only when the data frame is of the QoS data subtype.

The HT Control field is a new added MAC layer field in 802.11n. Since 802.11n, MAC has started to support 40M bandwidth, which is to merge original two 20M bandwidths into one 40M bandwidth. This field provides some control for high-throughput data. This field exists only when the frame is set to the high-throughput frame.

The frame body (data) is information or data sent or received.

FCS includes a 32-bit cyclic redundancy checksum (CRC) for error detection.

Since the zero-power-consumption terminal may be passive and do not have the battery, it needs to operate by obtaining energies from external environment, for example, harvesting the energies by means of the radio frequency signal, natural light, pressure, heat, etc. However, the obtaining of these energies cannot provide stable energy for the operation of the zero-power-consumption terminal, including driving the clock circuit of the zero-power-consumption terminal. Even if the energy obtained by the zero-power-consumption terminal can drive the clock circuit of the zero-power-consumption terminal, due to cost and power consumption reasons, the clock circuit part of the zero-power-consumption terminal often adopts a simplified circuit of the RC oscillator, which has relatively large errors in timing, frequency and phase. The measured error of the RC oscillator is about 0.89%. Currently, the clock accuracy of the device of 802.11 is up to ±20 ppm, which is achieved by the high-precision crystal oscillator.

If the zero-power-consumption terminal cannot obtain an accurate clock, correct transmission and reception of data cannot be performed. In existing WiFi technologies, the impact of the zero-power-consumption terminal being unable to obtain the accurate clock on communications is not taken into consideration.

For convenience of understanding the technical solutions of the embodiments of the present application, the technical solutions of the present application will be described below in detail through specific embodiments. The foregoing relevant technologies may be arbitrarily combined as optional solutions with the technical solutions of the embodiments of the present application, and they all belong to the protection scope of the embodiments of the present application. The embodiments of the present application include at least part of the following contents.

A wireless communication method provided in embodiments of the present application is shown in FIG. 9 and is applied to a zero-power-consumption STA, and the method includes the following step.

In S901, the zero-power-consumption STA is indicated by an access point (AP) whether to receive a data part of a first physical layer protocol data unit (PPDU) frame.

The zero-power-consumption STA may also be understood as a low power consumption device or a zero-power-consumption terminal that has accessed the AP. The zero-power-consumption STA may be passive, semi-passive, or active.

The zero-power-consumption STA and the accessed AP may constitute a zero-power-consumption IoT.

The AP sends the first PPDU frame to the zero-power-consumption STA. The first PPDU frame may be any PPDU frame that is sent by the AP to the zero-power-consumption STA. A frame type of the first PPDU frame includes, but is not limited to, a beacon frame, an association request frame, a probe request frame, or the like. The embodiments of the present application do not impose any limitation on the frame type of the first PPDU frame.

The first AP also indicates the zero-power-consumption STA whether to receive the data part of the first PPDU frame. In this case, the zero-power-consumption STA is indicated by the AP whether to receive the data part of the first PPDU frame.

In the embodiments of the present application, the AP only indicates the zero-power-consumption STA whether to receive the data part of the first PPDU frame, and whether the zero-power-consumption STA receives the data part of the first PPDU frame may be determined by the zero-power-consumption STA itself.

Optionally, in response that the zero-power-consumption STA is indicated by the AP to receive the data part of the first PPDU frame, the zero-power-consumption STA determines whether to receive the data part of the first PPDU frame, and receives or does not receive the data part of the first PPDU frame based on the determination result.

Optionally, in response that the zero-power-consumption STA is indicated by the AP not to receive the data part of the first PPDU frame, the zero-power-consumption STA does not perform determination for whether to receive the data part of the first PPDU frame.

In the wireless communication method provided in the embodiments of the present application, the AP indicates the zero-power-consumption STA whether to receive the data part of the first PPDU frame, and in a case where the zero-power-consumption STA does not maintain accurate time synchronization with the AP, whether to receive the data part of the first PPDU frame can be determined through the indication of the AP. Thus, in a scenario where the zero-power-consumption STA does not maintain the accurate time synchronization with the AP, reception of data will not be affected, and low complexity and low power consumption of the zero-power-consumption STA are ensured.

In some embodiments, the zero-power-consumption STA being indicated by the AP whether to receive the data part of the first PPDU frame, includes:
receiving, by the zero-power-consumption STA, first information sent by the AP, the first information being used to indicate the zero-power-consumption STA whether to receive the first PPDU frame, or the first information being used to indicate the zero-power-consumption STA whether to receive the data part of the first PPDU frame.

Optionally, the zero-power-consumption STA receives the first information sent by the AP, and the first information is used to indicate the zero-power-consumption STA whether to receive the first PPDU frame. In response that the first information is used to indicate the zero-power-consumption STA to receive the first PPDU frame, the zero-power-consumption STA is indicated by the AP to receive the data part of the first PPDU frame (that is, the AP indicates the zero-power-consumption STA to receive the data part of the first PPDU frame). In response that the first information is used to indicate the zero-power-consumption STA not to receive the first PPDU frame, the zero-power-consumption STA is indicated by the AP not to receive the data part of the first PPDU frame (that is, the AP indicates the zero-power-consumption STA not to receive the data part of the first PPDU frame.

In the case where the first information indicates the zero-power-consumption STA whether to receive the first PPDU frame, the first information is independent from the first PPDU frame.

Optionally, the zero-power-consumption STA receives the first information sent by the AP, and the first information is used to indicate the zero-power-consumption STA whether to receive the data part of the first PPDU frame. In response that the first information is used to indicate the zero-power-consumption STA to receive the data part of the first PPDU frame, the zero-power-consumption STA is indicated by the AP to receive the data part of the first PPDU frame (that is, the AP indicates the zero-power-consumption STA to receive the data part of the first PPDU frame). In response that the first information is used to indicate the zero-power-consumption STA not to receive the data part of the first PPDU frame, the zero-power-consumption STA is indicated by the AP not to receive the data part of the first PPDU frame (that is, the AP indicates the zero-power-consumption STA not to receive the data part of the first PPDU frame.

In the case where the first information indicates the zero-power-consumption STA whether to receive the data part of the first PPDU frame, the first information may be carried in the first PPDU frame.

In the case where the first information is carried in the first PPDU frame, the zero-power-consumption terminal may receive each PPDU frame. After receiving one PPDU frame, the zero-power-consumption STA parses the received PPDU frame to obtain the first information, and determines whether to receive the data part of the PPDU frame based on the first information.

In the embodiments of the present application, the AP sends the first information to the zero-power-consumption STA, the zero-power-consumption STA receives the first information sent by the AP, and the first information is used for the AP to indicate the zero-power-consumption STA whether to receive the data part of the first PPDU frame. Thus, in the case where the time of the zero-power-consumption STA and the time of the AP are not accurately synchronized, it is possible to determine whether there is a need to receive the data part of the first PPDU frame, thereby ensuring the low complexity and low power consumption of the zero-power-consumption STA.

A wireless communication method provided in embodiments of the present application is shown in FIG. 10 and is applied to an AP, and the method includes the following step.

In S1001, the AP indicates the zero-power-consumption STA whether to receive a data part of a first physical layer protocol data unit (PPDU) frame.

The zero-power-consumption STA may also be understood as a low power consumption device that has accessed the AP. The zero-power-consumption STA may be passive, semi-passive, or active.

The zero-power-consumption STA and the accessed AP may constitute a zero-power-consumption IoT.

The AP sends the first PPDU frame to the zero-power-consumption STA. The first PPDU frame may be any PPDU frame that is sent by the AP to the zero-power-consumption STA. A frame type of the first PPDU frame includes, but is not limited to, a beacon frame, an association request frame, a probe request frame, or the like. The embodiments of the present application do not impose any limitation on the frame type of the first PPDU frame.

The AP also indicates the zero-power-consumption STA whether to receive the data part of the first PPDU frame. In this case, the zero-power-consumption STA is indicated by the AP whether to receive the data part of the first PPDU frame.

In the embodiments of the present application, the AP only indicates the zero-power-consumption ST whether to receive the data part of the first PPDU frame, and whether the zero-power-consumption STA receives the data part of the first PPDU frame may be determined by the zero-power-consumption STA itself.

Optionally, in response that the zero-power-consumption STA is indicated by the AP to receive the data part of the first PPDU frame, the zero-power-consumption STA determines whether to receive the data part of the first PPDU frame, and receives or does not receive the data part of the first PPDU frame based on the determination result.

Optionally, in response that the zero-power-consumption STA is indicated by the AP not to receive the data part of the first PPDU frame, the zero-power-consumption STA does not perform determination for whether to receive the data part of the first PPDU frame.

In the wireless communication method provided in the embodiments of the present application, the AP indicates the zero-power-consumption STA whether to receive the data part of the first PPDU frame, and in a case where the zero-power-consumption STA does not maintain accurate time synchronization with the AP, whether to receive the data part of the first PPDU frame can be determined through the indication of the AP. Thus, in a scenario where the zero-power-consumption STA does not maintain the accurate time synchronization with the AP, reception of data will not be affected, and low complexity and low power consumption of the zero-power-consumption STA are ensured.

In some embodiments, indicating, by the AP, the zero-power-consumption STA whether to receive the data part of the first PPDU frame, includes:
sending, by the AP, first information to the zero-power-consumption STA, the first information being used to indicate the zero-power-consumption STA whether to receive the first PPDU frame, or the first information being used to indicate the zero-power-consumption STA whether to receive the data part of the first PPDU frame.

Optionally, the zero-power-consumption STA receives the first information sent by the AP, and the first information is used to indicate the zero-power-consumption STA whether to receive the first PPDU frame. In response that the first information is used to indicate the zero-power-consumption STA to receive the first PPDU frame, the zero-power-consumption STA is indicated by the AP to receive the data part of the first PPDU frame (that is, the AP indicates the zero-power-consumption STA to receive the data part of the first PPDU frame). In response that the first information is used to indicate the zero-power-consumption STA not to receive the first PPDU frame, the zero-power-consumption STA is indicated by the AP not to receive the data part of the first PPDU frame (that is, the AP indicates the zero-power-consumption STA not to receive the data part of the first PPDU frame.

In the case where the first information indicates the zero-power-consumption STA whether to receive the first PPDU frame, the first information is independent from the first PPDU frame.

Optionally, the zero-power-consumption STA receives the first information sent by the AP, and the first information is used to indicate the zero-power-consumption STA whether to receive the data part of the first PPDU frame. In response that the first information is used to indicate the zero-power-consumption STA to receive the data part of the first PPDU frame, the zero-power-consumption STA is indicated by the AP to receive the data part of the first PPDU frame (that is, the AP indicates the zero-power-consumption STA to receive the data part of the first PPDU frame). In response that the first information is used to indicate the zero-power-consumption STA not to receive the data part of the first PPDU frame, the zero-power-consumption STA is indicated by the AP not to receive the data part of the first PPDU frame (that is, the AP indicates the zero-power-consumption STA not to receive the data part of the first PPDU frame.

In the case where the first information indicates the zero-power-consumption STA whether to receive the data part of the first PPDU frame, the first information may be carried in the first PPDU frame.

In the embodiments of the present application, the AP sends the first information to the zero-power-consumption STA, the zero-power-consumption STA receives the first information sent by the AP, and the first information is used for the AP to indicate the zero-power-consumption STA whether to receive the data part of the first PPDU frame. Thus, in the case where the time of the zero-power-consumption STA and the time of the AP are not accurately synchronized, it is possible to determine whether there is a need to receive the data part of the first PPDU frame, thereby ensuring the low complexity and low power consumption of the zero-power-consumption STA.

A wireless communication method provided in embodiments of the present application is shown in FIG. 11 and is applied to a communication system including an AP and a zero-power-consumption STA, and the method includes the following steps.

In S1101, AP sends first information to the zero-power-consumption STA.

Optionally, the first information is used to indicate the zero-power-consumption STA whether to receive the first PPDU frame.

Optionally, the first information is used to indicate the zero-power-consumption STA whether to receive the data part of the PPDU frame.

In S1102, the zero-power-consumption STA determines, based on the first information, that the AP indicates the zero-power-consumption STA whether to receive the data part of the first PPDU frame.

In an example where the first information is used to indicate the zero-power-consumption STA whether to receive the PPDU frame, in response that the first information is used to indicate the zero-power-consumption STA to receive the data part of the first PPDU frame, the zero-power-consumption STA is indicated by the AP to receive the data part of the first PPDU frame (that is, the AP indicates the zero-power-consumption STA to receive the data part of the first PPDU frame), and in this case, based on the first information, the zero-power-consumption STA determines that the AP indicates the zero-power-consumption STA to receive the data part of the first PPDU frame; in response that the first information is used to indicate the zero-power-consumption STA not to receive the data part of the first PPDU frame, the zero-power-consumption STA is indicated by the AP not to receive the data part of the first PPDU frame (that is, the AP indicates the zero-power-consumption STA not to receive the data part of the first PPDU frame), and in this case, based on the first information, the zero-power-consumption STA determines that the AP indicates the zero-power-consumption STA not to receive the data part of the first PPDU.

In an example where the first information is used to indicate the zero-power-consumption STA whether to receive the data part of the PPDU frame, in response that the first information is used to indicate the zero-power-consumption STA to receive the data part of the first PPDU frame, the zero-power-consumption STA is indicated by the AP to receive the data part of the first PPDU frame (that is, the AP indicates the zero-power-consumption STA to receive the data part of the first PPDU frame), and in this case, based on the first information, the zero-power-consumption STA determines that the AP indicates the zero-power-consumption STA to receive the data part of the first PPDU frame; in response that the first information is used to indicate the zero-power-consumption STA not to receive the data part of the first PPDU frame, the zero-power-consumption STA is indicated by the AP not to receive the data part of the first PPDU frame (that is, the AP indicates the zero-power-consumption STA not to receive the data part of the first PPDU frame), and in this case, based on the first information, the zero-power-consumption STA determines that the AP indicates the zero-power-consumption STA not to receive the data part of the first PPDU.

The first information in the wireless communication method provided in the embodiments of the present application will be described below.

The first information includes at least one of the followings:
first indication information used to indicate a frame type of the first PPDU frame;
second indication information used to indicate first time information, the first time information corresponding to a time of receiving the first PPDU frame; and
third indication information used to indicate a receiving terminal of the first PPDU frame.

In embodiments of the present application, the first information may include one or more of the first indication information, the second indication information and the third indication information.

For the first indication information, the AP indicates the frame type of the first PPDU frame to the zero-power-consumption STA through the first indication information, and the zero-power-consumption STA determines whether the first PPDU frame is a target reception frame based on the frame type indicated by the first indication information. A frame type of the target reception frame is a target frame type.

In some embodiments, in a case where the frame type of the first PPDU frame indicated by the first indication information is the target frame type, the first indication information is used to indicate the zero-power-consumption STA to receive the data part of the first PPDU frame.

Here, the target frame type is the frame type of the PPDU frame that currently needs to be received, i.e., the target reception frame.

In response that the first indication information indicates that the frame type of the first PPDU frame is the target frame type, the first PPDU frame is the target reception frame, and the AP notifies the zero-power-consumption STA through the first indication information that the current first PPDU frame is the target reception frame. It can be understood that the AP indicates the zero-power-consumption STA to receive the first PPDU frame through the first indication information for indicating the target frame type.

In response that the first indication information indicates that the frame type of the first PPDU frame is not the target frame type, the first PPDU frame is not the target reception frame, and the AP indicates the zero-power-consumption STA not to receive the data part of the first PPDU frame through the first indication information. Alternatively, in response that the first indication information for indicating the target frame type is not carried in the first information, the first PPDU frame is not the target reception frame, and the AP indicates the zero-power-consumption STA not to receive the data part of the first PPDU frame.

Optionally, the target frame type may be determined by the zero-power-consumption STA according to communication requirements, which is, for example, a beacon frame, an association request frame, a data frame, an acknowledge (ACK) frame, or the like. Here, the first PPDU frame whose frame type is the target frame type may be referred to as the target reception frame that needs to be received.

The AP, only when sending the first PPDU frame whose frame type is the target frame type, may send the first indication information for the first PPDU frame, and the first indication information indicates the target frame type. In this case, when the zero-power-consumption STA receives the first indication information, it is determined that the AP indicates the zero-power-consumption STA to receive the data part of the first PPDU frame.

In an example, the target frame type is a beacon frame; in response that the first PPDU frame sent by the AP is the beacon frame, the AP sends the first indication information to the zero-power-consumption STA, and the first indication information indicates the beacon frame; and in response that the zero-power-consumption STA receives the first indication information for indicating the beacon frame, the zero-power-consumption STA determines that the AP indicates the zero-power-consumption STA to receive the current first PPDU frame indicated by the first indication information, and the first PPDU frame is the beacon frame.

In an example, the target frame type is a beacon frame; in response that the first PPDU frame sent by the AP is not the beacon frame, the AP does not send the first indication information for indicating the beacon frame to the zero-power-consumption STA; and in response that the zero-power-consumption STA does not receive the first indication information, the zero-power-consumption STA determines that the AP indicates the zero-power-consumption STA not to receive the current first PPDU frame indicated by the first indication information, and the first PPDU frame is not the beacon frame.

The AP may also send the first indication information for the first PPDU frame when sending the first PPDU frame, and the first indication information indicates the frame type of the first PPDU frame. In response that the zero-power-consumption STA receives the first indication information and the frame type indicated by the first indication information is determined to be the target frame type, it is determined that the AP indicates the zero-power-consumption STA to receive the data part of the first PPDU frame.

In an example, the target frame type is a beacon frame; in response that the first PPDU frame sent by the AP is the beacon frame, the first indication information sent to the zero-power-consumption STA is information 1, and the frame type indicated by the information 1 is the beacon frame; and in response that the first indication information received by the zero-power-consumption STA is the information 1 and the first PPDU frame is determined to be the beacon frame based on the information 1, the zero-power-consumption STA determines that the AP indicates the zero-power-consumption STA to receive the first PPDU frame based on the information 1.

In an example, the target frame type is a beacon frame; in response that the first PPDU frame sent by the AP is a clear to send (CTS) frame, the first indication information sent to the zero-power-consumption STA is information 2, and the frame type indicated by the information 2 is the CTS frame; and in response that the first indication information received by the zero-power-consumption STA is the information 2 and the first PPDU frame is determined to be the CTS frame based on the information 2, the zero-power-consumption STA determines that the AP indicates the zero-power-consumption STA not to receive the first PPDU frame based on the information 2.

In some embodiments, the first indication information includes one of the followings: type information or subtype information.

The type information may be understood as type, which is used to indicate a control frame, a management frame, a data frame, or other frame type. The control frame is used for handshake communication and positive acknowledge during a contention period, and ending a non-contention period, which is, for example, a request to send (RTS) frame, a CTS frame, or an ACK frame. The management frame is used for negotiation and relationship control between the zero-power-consumption STA and the AP, which is, for example, a beacon frame, or an association frame. The data frame is used for transmitting data during the contention period and non-contention period.

The subtype information may be understood as subtype, and the combination of subtype and type is used to determine the frame type of the first PPDU frame.

In an example, the type information is 01 indicating the control frame, and the subtype is 1100; and thus, the frame type is the CTS frame.

In an example, the type information is 00 indicating the management frame, and the subtype is 1000; and thus, the frame type is the beacon frame.

In some embodiments, the first indication information is a first feature sequence, and the first feature sequence is a feature sequence that identifies the frame type of the first PPDU frame.

Optionally, the frame type indicated by the first feature sequence is a target frame type. In an example, the target frame type is frame type 1, and the first feature sequence corresponding to frame type 1 is sequence 1.

Optionally, different frame types correspond to different first feature sequences. In an example, the first feature sequence corresponding to frame type 1 is sequence 1, and the first feature sequence corresponding to frame type 2 is sequence 2.

It can be understood that the first feature sequence may include type information and/or subtype information, or may be a customized sequence.

In some embodiments, the first indication information is a first physical preamble, and the first physical preamble is a physical layer preamble that identifies the frame type of the first PPDU frame.

Optionally, the frame type indicated by the first physical preamble is a target frame type. In an example, the target frame type is frame type 1, and the first physical preamble corresponding to frame type 1 is preamble 1.

Optionally, different frame types correspond to different physical preambles. In an example, the first physical preamble corresponding to frame type 1 is physical preamble 1, and the first physical preamble corresponding to frame type 2 is physical preamble 2.

It can be understood that the first physical preamble sent by the AP to the zero-power-consumption STA is determined based on the frame type of the first PPDU frame, rather than being fixed.

In embodiments of the present application, the relationship between the first indication information and the first PPDU frame includes one of the followings:
relationship A1, in which the first indication information is independent from the first PPDU frame; and
relationship A2, in which the first indication information is carried in the first PPDU frame.

In relationship A1, the first indication information is independent from the first PPDU frame. The first indication information and the first PPDU frame may be sent from the AP to the zero-power-consumption STA simultaneously, or may be sent from the AP to the zero-power-consumption STA separately.

After receiving the first indication information, the zero-power-consumption STA determines, based on the first indication information, that the frame type of the first PPDU frame is the target frame type, and the first indication information indicates the zero-power-consumption STA to receive the first PPDU frame, i.e., to receive the physical part and the data part of the first PPDU frame.

In relationship A2, the first indication information is carried in the first PPDU frame.

The zero-power-consumption STA receives the first PPDU frame and parses the received first PPDU frame to obtain the first indication information; and in the case where the first indication information indicates the target frame type, the zero-power-consumption STA determines that the AP indicates the zero-power-consumption STA to receive the data part of the first PPDU frame.

In an example, the first indication information is carried in the MAC header of the first PPDU frame. The zero-power-consumption STA receives the MAC header of the data part of the first PPDU frame, and the zero-power-consumption STA needs to receive the data part and perform decoding and checking to determine the frame type. In the case where the zero-power-consumption STA determines that the frame type is the target frame type, the zero-power-consumption STA continues to receive other data in the data part of the first PPDU frame. It can be understood that the zero-power-consumption STA needs the information carried by the MAC part of the first PPDU frame to determine whether the frame type of the currently received first PPDU frame is the target frame type, which has higher requirements on the abilities and functions of the zero-power-consumption STA.

In some embodiments, the first indication information is carried in the physical layer part of the first PPDU frame.

When the AP sends the first PPDU frame, the first indication information may be carried in the physical layer part of the first PPDU frame. The zero-power-consumption STA detects the physical layer part of the first PPDU frame, and determines whether the first PPDU frame is a target reception frame. In the case where the first PPDU frame is the target reception frame, the zero-power-consumption STA determines that the AP indicates the zero-power-consumption STA to receive the first PPDU frame; and in the case where the first PPDU frame is not the target reception frame, the zero-power-consumption STA determines that the AP indicates the zero-power-consumption STA not to receive the first PPDU frame.

The first indication information may be carried in the physical layer preamble or physical layer header of the first PPDU frame, or may be carried in other location of the physical layer part.

In an example, the first indication information is added to the physical layer preamble of the first PPDU frame. The zero-power-consumption STA detects the physical layer preamble of the PPDU frame, and then determines whether the first PPDU frame is the target reception frame based on the detection of the first indication information.

In an example, the first indication information is added to the physical layer header of the first PPDU frame. The zero-power-consumption STA detects the physical layer header of the PPDU frame, and then determines whether the first PPDU frame is the target reception frame based on the detection of the first indication information.

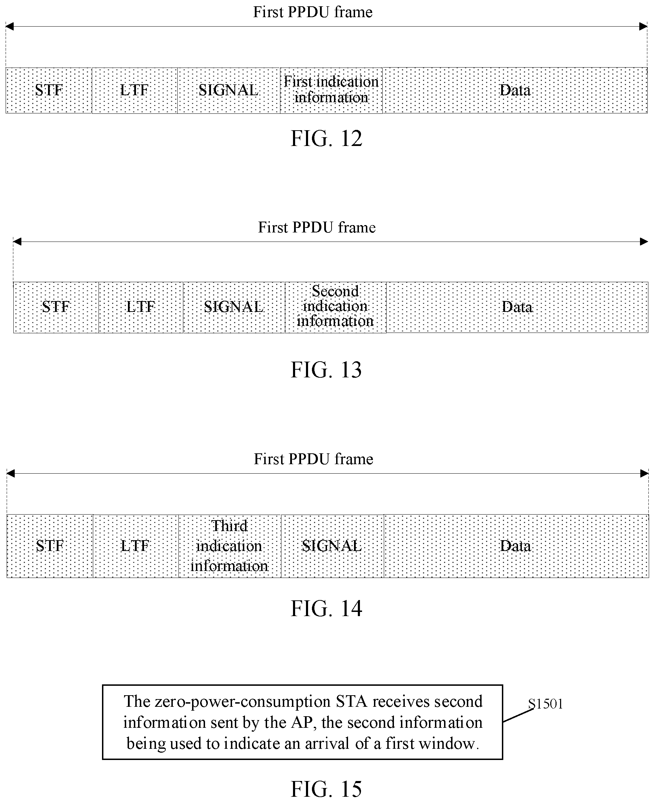

In an example, the location of the first indication information in the physical layer part is shown in FIG. 12, and is located after SIGNAL in the physical layer part.

In the embodiments of the present application, the location of the first indication information in the physical layer part of the first PPDU frame is not unique. Other fields contained in the physical layer part of the first PPDU frame are also not limited.

For the second indication information, the AP indicates the first time information to the zero-power-consumption STA through the second indication information, and the zero-power-consumption STA determines the first time information based on the second indication information. The first time information corresponds to a time of receiving the first PPDU frame.

In some embodiments, the second indication information is used to indicate the zero-power-consumption STA to receive the data part of the first PPDU frame.

Here, in the case where the first PPDU frame is the target reception frame, the AP sends the second indication information to the zero-power-consumption STA, and the first time information indicated by the second indication information corresponds to the time of receiving the first PPDU frame. The zero-power-consumption STA determines, according to the second indication information, that the AP indicates the zero-power-consumption STA to receive the first PPDU frame, and the reception time of the first PPDU frame corresponds to the first time information.

The first time information indicated by the second indication information may be a first time point, a first duration, or an arrival indication for indicating an arrival reception time.

In the case where the first time information is the first time point, the reception time of the first PPDU frame is the first time point or a second time point, and the second time point is a time point obtained by adding a second duration to the first time point.

In the case where the first time information is the first duration, the reception time of the first PPDU frame is a third time point, and the third time point is a time point after the time point of receiving the second indication information and having an interval of the first duration with the time point of receiving the second indication information.

In the case where the first time information is the arrival indication, the reception time of the first PPDU frame is a fourth time point or a fifth time point, the fourth time point is a time point when the second indication information is received, and the fifth time point is a time point that is obtained by adding a third duration to the fourth time point.

It can be understood that the first PPDU frame received by the zero-power-consumption STA is the first PPDU frame received after the reception time of the first PPDU frame.

Here, after the zero-power-consumption STA determines the reception time of the first PPDU frame based on the second indication information, the zero-power-consumption STA enters a sleep state before the reception time of the first PPDU frame, and enters an awake state after the reception time of the first PPDU frame arrives to monitor the first PPDU frame sent by the AP.

In some embodiments, the first time information corresponds to a first transmission time or a first time interval; the first transmission time is a sending time of the AP periodically sending the first PPDU frame, and the first time interval is a duration of a sleep state between two awake states of the zero-power-consumption STA.

In the case where the first time information corresponds to the first transmission time, the first PPDU frame is a PPDU frame that is sent periodically, for example, a beacon frame.

In the case where the first PPDU frame is the beacon frame, the first transmission time may be a target beacon transmission time (TBTT). TBTT is a periodic time of sending/receiving beacon frame action, and the periodic time is determined by the beacon interval that indicates the time interval for sending the beacon.

In the case where the first time information corresponds to the first time interval, the zero-power-consumption STA enters the awake state after the first time interval, and monitors the first PPDU frame in the awake state. Here, the first PPDU frame may be the beacon frame.

In the case where the first PPDU frame is the beacon frame, the first time interval may be a listen interval, and at least one TBTT may pass during one listen interval.

In some embodiments, a time granularity of the first time information is a second time interval, and the second time interval is a sending interval of the AP sending the first PPDU frame.

Here, in a case where the timestamp field indicated in the beacon frame includes 64 bits and is used to synchronize the STA in the BSS, the second indication information only needs to occupy part of the bits in the timestamp field, and does not need to occupy all 64 bits of the timestamp field.

Here, the AP sends the first PPDU frame at a second time interval. Therefore, the time granularity of the first time information is the second time interval, and there is no need to limit the time granularity of the first time information to microseconds while ensuring that the zero-power-consumption STA correctly receives the first PPDU frame, thereby achieving the low complexity of the zero-power-consumption STA.

In the embodiments of the present application, the relationship between the second indication information and the first PPDU frame includes one of the followings:
relationship B1, in which the second indication information is independent from the first PPDU frame; and
relationship B2, in which the second indication information is carried in the first PPDU frame.

In relationship B1, the second indication information is independent from the first PPDU frame. The second indication information and the first PPDU frame may be sent from the AP to the zero-power-consumption STA simultaneously, or may be sent from the AP to the zero-power-consumption STA separately.

After receiving the second indication information, the zero-power-consumption STA determines the first time information based on the second indication information. The second indication information is used to indicate the zero-power-consumption STA to receive the first PPDU frame and to receive the first PPDU frame at the reception time of the first PPDU frame.

In the case where the second indication information is independent from the first PPDU frame, the second indication information may be located in any PPDU frame before the first PPDU frame.

In relationship B2, the second indication information is carried in the first PPDU frame.

The zero-power-consumption STA receives the first PPDU frame and parses the received first PPDU frame to obtain the second indication information. The zero-power-consumption STA determines that the AP indicates the zero-power-consumption STA to receive the data part of the first PPDU frame.

In an example, the second indication information is carried in the MAC header of the first PPDU frame. The zero-power-consumption STA receives the MAC header of the data part of the first PPDU frame, and the STA needs to receive the data part and perform decoding and checking to determine the second indication information. In a case where the first time indicated by the second indication information corresponds to the reception time of the current first PPDU frame, the zero-power-consumption STA continues to receive other data in the data part of the first PPDU frame.

In some embodiments, the second indication information is carried in the physical layer part of the first PPDU frame.

When the AP sends the first PPDU frame, the second indication information may be carried in the physical layer part of the first PPDU frame. The zero-power-consumption STA detects the physical layer part of the first PPDU frame, determines the first time information, and determines whether to receive the first PPDU frame based on the first time information. In the case of receiving, it is determined that the current first PPDU frame is a target reception frame. In the case where the first PPDU frame is the target reception frame, the zero-power-consumption STA determines that the AP indicates the zero-power-consumption STA to receive the data part of the first PPDU frame. In the case where the first PPDU frame is not the target reception frame, the zero-power-consumption STA determines that the AP indicates the zero-power-consumption STA not to receive the data part of the first PPDU frame.

The second indication information may be carried in the physical layer preamble or physical layer header of the first PPDU frame, or may be carried in other location of the physical layer part.

In an example, the second indication information is added to the physical layer preamble of the first PPDU frame. The zero-power-consumption STA detects the physical layer preamble of the PPDU frame, and then determines whether the first PPDU frame is the target reception frame based on the detection of the second indication information.

In an example, the second indication information is added to the physical layer header of the first PPDU frame. The zero-power-consumption STA detects the physical layer header of the PPDU frame, and then determines whether the first PPDU frame is the target reception frame based on the detection of the second indication information.

In an example, the location of the second indication information in the physical layer part is shown in FIG. 13, and is located after SIGNAL in the physical layer part.

In the embodiments of the present application, the location of the second indication information in the physical layer part of the first PPDU frame is not unique. Other fields contained in the physical layer part of the first PPDU frame are also not limited.

In some embodiments, information carried by the first PPDU frame is different, and a corresponding second indication information is different.

In the embodiments of the present application, for first PPDU frames that needs to be received, different types of first PPDU frames correspond to different second indication information. Different types of first PPDU frames carry different information.

In an example, the first PPDU frames are beacon frames, and the second indication information corresponding to a beacon frame carrying a traffic indication map (TIM) is different from the second indication information corresponding to a beacon frame carrying a delivery traffic indication map (DTIM).

The second indication information corresponding to the beacon frame carrying TIM is information A, and the second indication information corresponding to the beacon frame carrying DTIM is information B. In the case where the second indication information received by the zero-power-consumption STA is information A, it is determined that the AP indicates the zero-power-consumption STA not to receive the beacon frame, and the beacon frame is the beacon frame carrying TIM. In the case where the second indication information received by the zero-power-consumption STA is information B, it is determined that the AP indicates the zero-power-consumption STA to receive the beacon frame, and the beacon frame is the beacon frame carrying DTIM.

It can be understood that, TIM is a traffic indication map based on a bitmap structure, and is used to identify the buffer information of the AP. The zero-power-consumption STA may check, based on the TIM, whether the buffer of the zero-power-consumption STA is included in the buffer information of the AP. In addition to indicating buffered unicast information, DTIM also indicates multicast information buffered by the AP. The period of the beacon frame carrying DTIM is several times that of TBTT, that is, among every certain number of beacon frames that are sent, one beacon frame carries DTIM, and the other beacon frames carry TIM. Therefore, the period of DTIM includes an integer number of beacon intervals. For DTIM sent by the AP, the zero-power-consumption STA should be in the awake state to receive broadcast and multicast information, as well as unicast information. However, for the beacon frame carrying TIM sent by the AP, the zero-power-consumption STA does not necessarily need to be awake to receive unicast information, which depends on the listen interval.

For the third indication information, the AP indicates the receiving terminal of the first PPDU frame to the zero-power-consumption STA through the third indication information, and the zero-power-consumption STA determines, based on the third indication information, whether the first PPDU frame is a first PPDU frame that the current zero-power-consumption STA needs to receive. In a case where the receiving terminal of the first PPDU frame is the current zero-power-consumption STA, it is determined that the first PPDU frame is a target reception frame that needs to be received by the zero-power-consumption STA.

In some embodiments, in the case where the third indication information indicates that the receiving terminal is the zero-power-consumption STA, the third indication information is used to indicate the zero-power-consumption STA to receive the data part of the first PPDU frame.

In the case where the third indication information indicates that the receiving terminal of the first PPDU frame is the zero-power-consumption STA, for the zero-power-consumption STA, the first PPDU frame is the target PPDU frame to be received by the zero-power-consumption STA, and the zero-power-consumption STA is indicated by the AP to receive the data part of the first PPDU frame. In the case where the third indication information indicates that the receiving terminal of the first PPDU frame is not the zero-power-consumption STA, for the zero-power-consumption STA, the first PPDU frame is not the target PPDU frame to be received by the zero-power-consumption STA, and the zero-power-consumption STA is indicated by the AP not to receive the data part of the first PPDU frame.

In an example, for the zero-power-consumption STA, which is STA1, in a case where the third indication information corresponding to the first PPDU frame received by STA1 indicates that the receiving terminal is STA2, the AP indicates STA1 not to receive the first PPDU frame. For the zero-power-consumption STA, which is STA2, in a case where the third indication information corresponding to the first PPDU frame received by STA2 indicates that the receiving terminal is STA2, the AP indicates STA2 to receive the first PPDU frame.

In some embodiments, the third indication information is an association identifier (AID) or a group AID.

Here, one AP may be associated with N AIDs, and one zero-power-consumption STA may be associated with one AID or multiple zero-power-consumption STAs may be associated with one AID. Here, the AID associated with multiple zero-power-consumption STAs is referred to as the group AID.

In the embodiments of the present application, the relationship between the third indication information and the first PPDU frame includes one of the followings:
relationship C1, in which the third indication information is independent from the first PPDU frame; and
relationship C2, in which the third indication information is carried in the first PPDU frame.

In relationship C1, the third indication information is independent from the first PPDU frame. The third indication information and the first PPDU frame may be sent from the AP to the zero-power-consumption STA simultaneously, or may be sent from the AP to the zero-power-consumption STA separately.

After receiving the third indication information, the zero-power-consumption STA determines, based on the third indication information, that the receiving terminal of the first PPDU frame is the current zero-power-consumption STA, and the first indication information indicates the zero-power-consumption STA to receive the first PPDU frame, i.e., to receive the physical part and the data part of the first PPDU frame.

In the case where the third indication information is independent from the first PPDU frame, the third indication information may be located in any PPDU frame before the first PPDU frame.

In relationship C2, the third indication information is carried in the first PPDU frame.

The zero-power-consumption STA receives the first PPDU frame and parses the received first PPDU frame to obtain the third indication information, and in the case where the third indication information indicates the current zero-power-consumption STA, the zero-power-consumption STA determines that the AP indicates the zero-power-consumption STA to receive the data part of the first PPDU frame.

In an example, the third indication information is carried in the MAC header of the first PPDU frame. The zero-power-consumption STA receives the MAC header of the data part of the first PPDU frame, and the zero-power-consumption STA needs to receive the data part and perform decoding and checking to determine the third indication information. In the case where the receiving terminal indicated by the third indication information is the current zero-power-consumption STA, the zero-power-consumption STA continues to receive other data in the data part of the first PPDU frame.

In some embodiments, the third indication information is carried in the physical layer part of the first PPDU frame.

When the AP sends the first PPDU frame, the third indication information may be carried in the physical layer part of the first PPDU frame. The zero-power-consumption STA detects the physical layer part of the first PPDU frame, and determines whether the first PPDU frame is a target reception frame. In the case where the first PPDU frame is the target reception frame, the zero-power-consumption STA determines that the AP indicates the zero-power-consumption STA to receive the data part of the first PPDU frame; and in the case where the first PPDU frame is not the target reception frame, the zero-power-consumption STA determines that the AP indicates the zero-power-consumption STA not to receive the data part of the first PPDU frame.

The third indication information may be carried in the physical layer preamble or physical layer header of the first PPDU frame, or may be carried in other location of the physical layer part.

In an example, the third indication information is added to the physical layer preamble of the first PPDU frame. The zero-power-consumption STA detects the physical layer preamble of the PPDU frame, and then determines whether the first PPDU frame is the target reception frame based on the detection of the third indication information.

In an example, the third indication information is added to the physical layer header of the first PPDU frame. The zero-power-consumption STA detects the physical layer header of the PPDU frame, and then determines whether the first PPDU frame is the target reception frame based on the detection of the third indication information.

In an example, the location of the third indication information in the physical layer part is shown in FIG. 14, and is located between LTF and SIGNAL in the physical part.

In the embodiments of the present application, the location of the third indication information in the physical layer part of the first PPDU frame is not unique. Other fields contained in the physical layer part of the first PPDU frame are also not limited.

A wireless communication method provided in embodiments of the present application is shown in FIG. 15 and is applied to the zero-power-consumption STA, and the method includes the following step.

In S1501, the zero-power-consumption STA receives second information sent by the AP, the second information being used to indicate an arrival of a first window.

In the embodiments of the present application, the AP determines the arrival of the first window based on a local clock, and then sends the second information to the zero-power-consumption STA. The second information is used to indicate the arrival of the first window, and the first window is a window applied to the zero-power-consumption STA. After receiving the second information, the zero-power-consumption STA determines the arrival of the first window based on the second information, and triggers the first window according to the indication of the second information.

Optionally, in response to the arrival of the first window, the zero-power-consumption STA performs an action corresponding to the first window.

The zero-power-consumption STA may exchange data after the first window arrives, or may access a channel after the first window arrives, to determine whether to access the channel for data transmission.

It can be understood that, the zero-power-consumption STA triggers the first window based on the second information sent by the AP, thereby receiving or sending data based on the triggered first window.

In the embodiments of the present application, the AP indicates the arrival of the first window to the zero-power-consumption STA through the second information, and the zero-power-consumption STA determines the arrival of the first window through the second information received from the AP. As a result, the zero-power-consumption STA does not need to determine whether the first window has been arrived through the local clock, thereby meeting the scenario where the zero-power-consumption STA cannot maintain accurate time synchronization with the AP.

In the embodiments of the present application, the zero-power-consumption STA may support the wireless communication method shown in FIG. 9 and the wireless communication method shown in FIG. 15. The wireless communication method shown in FIG. 9 and the wireless communication method shown in FIG. 15 may be implemented separately or together.

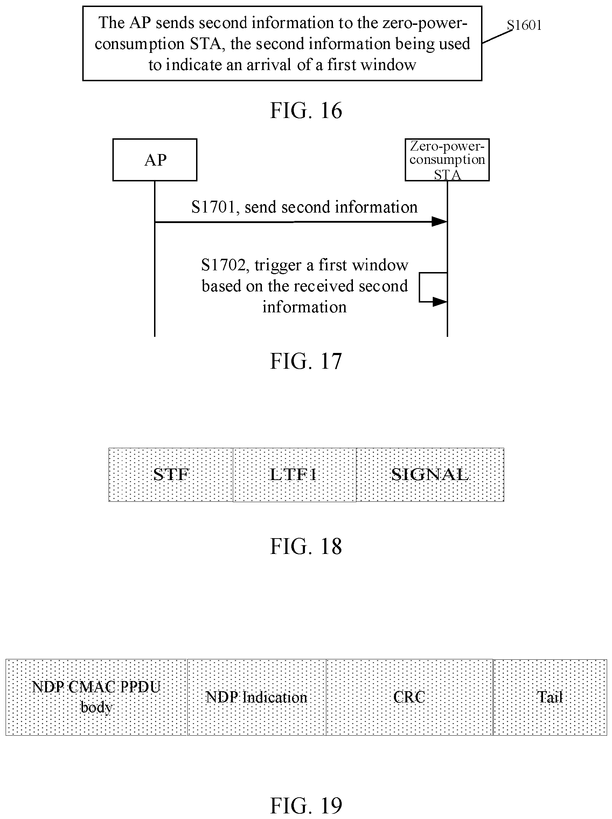

A wireless communication method provided in embodiments of the present application is shown in FIG. 16 and is applied to the AP, and the method includes the following step.

In S1601, the AP sends second information to the zero-power-consumption STA, the second information being used to indicate an arrival of a first window.

In the embodiments of the present application, the AP determines the arrival of the first window based on a local clock, and then sends the second information to the zero-power-consumption STA. The second information is used to indicate the arrival of the first window, and the first window is a window applied to the zero-power-consumption STA. After receiving the second information, the zero-power-consumption STA determines the arrival of the first window based on the second information, and triggers the first window according to the indication of the second information.

In the embodiments of the present application, the AP indicates the arrival of the first window to the zero-power-consumption STA through the second information, and the zero-power-consumption STA determines the arrival of the first window through the second information received from the AP. As a result, the zero-power-consumption STA does not need to determine whether the first window has been arrived through the local clock, thereby meeting the scenario where the zero-power-consumption STA cannot maintain accurate time synchronization with the AP.

In the embodiments of the present application, the AP may support the wireless communication method shown in FIG. 10 and the wireless communication method shown in FIG. 16. The wireless communication method shown in FIG. 10 and the wireless communication method shown in FIG. 16 may be implemented separately or together.

A wireless communication method provided in embodiments of the present application is shown in FIG. 17 and is applied to a communication system including the AP and the zero-power-consumption STA, and the method includes the following steps.

In S1701, the AP sends second information to the zero-power-consumption STA.

In S1702, the zero-power-consumption STA triggers a first window based on the received second information.

The second information in the wireless communication method provided in the embodiments of the present application will be described below.

In some embodiments, the second information is used to indicate second time information, and the second time information corresponds to the first window.

The second time information may be a sixth time point or a fourth duration.

In the case where the first time information is the sixth time point, the arrival time of the first window is the sixth time point or a seventh time point, and the seventh time point is a time point that is obtained by adding a fifth duration to the sixth time point.

In the case where the first time information is the fourth duration, the arrival time of the first window is an eighth time point, and the eighth time point is a time point after the time point of receiving the second information and having an interval of the fourth duration with the time point of receiving the second information.

In some embodiments, the second information is used to indicate trigger information, and the trigger information is used to trigger the first window.

After receiving the trigger information, the zero-power-consumption STA may trigger the first window at the time point of receiving the trigger information, or trigger the first window after a sixth duration.

In some embodiments, the second information is carried in a second PPDU frame.

The AP enables the second information to be carried in the second PPDU frame and sends the second PPDU frame to the zero-power-consumption STA. The zero-power-consumption STA determines the second information based on the received second PPDU frame and triggers the first window based on the second information.

Optionally, the second PPDU frame is a beacon frame.

In the embodiments of the present application, the zero-power-consumption STA enters the awake state in response that there is a need to receive a beacon frame, and receives the beacon frame in the awake state; and in response that the received beacon frame carries the second information, the zero-power-consumption STA determines the arrival time of the first window based on the second information. It can be understood that, the zero-power-consumption STA may enter the sleep state after receiving the beacon frame, enter the awake state at the arrival time of the first window, and trigger the first window in the awake state; or the zero-power-consumption STA may remain in the awake state after receiving the beacon frame, and trigger the first window at the arrival time of the first window.

In some embodiments, the second PPDU frame is a null data PPDU frame, i.e., a null data packet (NDP) PPDU frame.

The NDP PPDU frame does not carry data and is used for measurement or carrying control information. The frame structure of the NDP PPDU frame only includes the physical layer preamble and the physical layer header, but does not include the MAC frame header and the MAC server data unit (MSDU). In an example, a null data packet carrying medium access control information (NDP CMAC) PPDU frame only includes the physical layer preamble and the physical layer header. As shown in FIG. 18, the NDP CMAC PPDU frame includes the following fields: STF, LTF1, and SIGNAL.

In the embodiments of the present application, the second information may be carried in the SIGNAL field included in the NDP.

The structure of the SIGNAL field is shown in FIG. 19, which includes: NDP CMAC PPDU frame body, NDP indication, CRC and tail bits. The NDP CMAC PPDU frame body includes the NDP CMAC PPDU frame Type information and related control information. For example, the NDP CMAC PPDU frame Type indicates that the high NDP is CTS, and the control information carried by the NDP is CTS information.

Optionally, the second information may be carried in the NDP CMAC PPDU frame Type of the NDP CMAC PPDU frame body.

Optionally, the first window is a target wake time (TWT) period.

In the embodiments of the present application, in a case where the TWT period is the interval between two TWT times, the TWT period arrives, and the TWT time arrives; and the zero-power-consumption STA enters the awake state and exchanges data after the TWT time arrives, and enters the sleep state after completing the data exchange until the current TWT period ends and the next TWT period arrives.

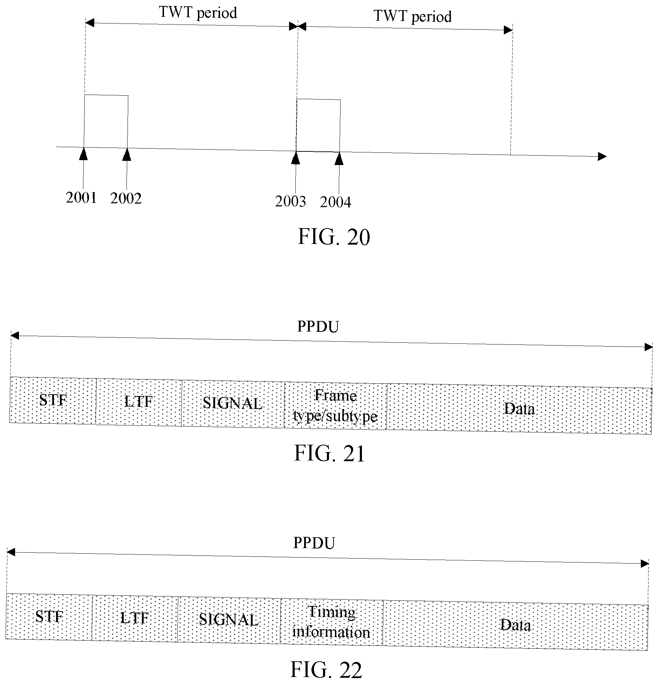

In an example, as shown in FIG. 20, the TWT period arrives at time point 2001, and the TWT time arrives at time point 2001; the zero-power-consumption STA enters the awake state at time point 2001 and exchanges data; and after completing the data exchange at time point 2002, the zero-power-consumption STA enters the sleep state until the next TWT period arrives at time point 2003. The zero-power-consumption STA enters the awake state again at time point 2003 and exchanges data until time point 2004.

In a case where the first window is the TWT period, the second information may indicate at least one of the following information of the TWT period: start time of the TWT period, end time of the TWT time and duration of the TWT period.

Optionally, the first window is a first restricted access window (RAW) corresponding to the zero-power-consumption STA.

A channel is divided into different time intervals, each time interval corresponds to a RAW and is allocated to a RAW group, and each RAW group includes a certain number of STAs. For a zero-power-consumption STA, when the first RAW corresponding to the zero-power-consumption STA arrives, the zero-power-consumption STA starts to access the channel. It can be understood that the RAW group corresponding to the first RAW includes the zero-power-consumption STA.

In the case where the first window is the first RAW, the second information may indicate at least one of the following information of the first RAW: start time of the first RAW, end time of the first RAW, and duration of the first RAW.

In some embodiments, the second PPDU frame is located in the first RAW or outside the first RAW, and the second PPDU frame is a PPDU frame carrying the second information.

In some embodiments, the second information corresponds a first time slot included in the first RAW, the first time slot corresponds to a first RAW group, and the first RAW group includes the zero-power-consumption STA.

Here, the first RAW may be divided into multiple slots, and each time slot corresponds to a different RAW group. The multiple slots divided from the first RAW include the first time slot, and the RAW group corresponding to the first time slot includes the zero-power-consumption STA.

The second information may correspond the first time slot included in the first RAW. That is, the second information indicates the arrival of the first time slot. It can be understood that, the second information may correspond one or more slots in the first RAW, and the one or more slots include the first time slot.

The wireless communication method provided in embodiments of the present application will be further described below.

During WiFi communication, the timing of transmission and reception of signals is determined based on a local clock. A local clock of the STA is also periodically aligned with the AP to ensure that the timing between devices is consistent, so that data transmitted and received at corresponding time.

In WiFi technology, a beacon frame is a broadcast management frame used to broadcast basic information of an AP. The beacon interval field indicated in the beacon frame indicates the time interval for sending beacon. Target beacon transmission time (TBTT) is a period of sending/receiving beacon actions after timing, and the duration of the period is determined by the beacon interval. When a TBTT arrives, the AP will actively send a beacon frame, and nodes will all actively receive the beacon frame (including a node in the sleep mode, which will wake up to receive the beacon, and then use the beacon frame to perform time synchronization and check the traffic indication message (TIM) field; if there is no data buffer of the node its own, the node will switch to the sleep mode until the next TBTT arrives). Each beacon frame has a TIM information, which is mainly used by the AP to inform that which STA, in STAs under the control of the AP, has information currently buffered in the AP.

Beacon frames are sent periodically according to the TBTT. The listen interval refers to the number of TBTTs experienced between two awakenings of a STA, i.e., the number of beacon frames skipped. The longer the listen interval is, the longer the STA sleeps. Thus, more energy is saved. However, the buffer space of the AP is occupied and the access delay is increased.

The timestamp field included in the beacon frame includes 64 bits and is used to synchronize the STA in the BSS. The AP in the BSS periodically sends clock information of the AP through beacon frames. After receiving the timestamp, the STA synchronizes its own local clock to be consistent with the AP. The AP sends its timing synchronization function (TSF) timer to the STA in the BSS through the timestamp field. The STA locally maintains a TSF timer with a length of 264, and the time length unit is in microseconds. After the STA receives the timestamp information, in response that the local TSF timer is inconsistent with the received timestamp, the STA updates its own TSF timer to the value of the received timestamp.

The above is the method for maintaining time synchronization between AP and STA in the current WiFi system. The STA can maintain the local TSF timer with a certain accuracy and periodically align the timing with the AP through beacon frames. The STA can determine the time of receiving and sending the PPDU frame based on the local TSF timer. For the zero-power-consumption STA, the local timing accuracy is poor, and even if timing is periodically provided for the zero-power-consumption STA through beacon frames, the zero-power-consumption STA cannot maintain accurate TSF timer for transmission and reception of information during the transmission intervals of beacon frames.

The wireless communication method provided in embodiments of the present application may include, but is not limited to, the following embodiments.

In Embodiment 1, whether a PPDU frame is a target reception frame is indicated in the physical layer part of the PPDU frame.

For the reception of some management frames, such as beacon frames, the zero-power-consumption STA needs to be in the awake state for receiving at the TBTT or listen interval to obtain information broadcasted by the AP. The arrival time of the TBTT and listen interval needs to be timed by the local timer of the STA. However, the zero-power-consumption STA cannot maintain accurate timing information.

In the prior art, the frame type carried by a PPDU frame is located in the data part of the PPDU frame, i.e., carried in the information part of the MAC layer. The STA needs to receive the data part and perform decoding and checking to determine the frame type.

**Table 1 examples of type and subtype**

| Type | Description of Type | Subtype | Description of Subtype |
|---|---|---|---|
| 01 | Control | 1100 | CTS |
| 01 | Control | 1101 | ACK |
| 00 | Management | 1000 | Beacon |
| 10 | Data | 0000 | Data |

For example, when type = 00, it represents that the PPDU frame is a management frame, and when subtype = 1000, it represents that the PPDU frame carries a beacon frame.

For the zero-power-consumption STA, the time of receiving a PPDU frame of a certain frame type cannot be determined by an accurate timer. In embodiments of the present application, the zero-power-consumption STA receives all PPDU frames, and determines, through the address information and frame type information carried by information in the MAC part of the PPDU frame, whether the currently received frame is a target PPDU frame that needs to be received. This makes rather high requirements for the abilities and the energy supply of zero-power-consumption STA.

If the zero-power-consumption STA can determine whether a PPDU frame is a target reception frame in the physical layer part of the PPDU frame, decoding operations of the zero-power-consumption STA on the information part of the MAC layer may be reduced, and the requirements for the abilities and energy supply of the zero-power-consumption STA may be reduced. Therefore, when the AP sends a PPDU frame, the frame type and frame subtype information may be carried in the physical layer part of the PPDU frame. For example, the frame type/frame subtype information is added to the physical layer header part of the PPDU frame. The zero-power-consumption STA detects the physical layer preamble of the PPDU frame, and then detects the frame type/frame subtype information to determine whether the PPDU frame is the target reception frame.

For example, the zero-power-consumption STA monitors a beacon frame and determines whether the beacon frame is a beacon frame sent by the AP by detecting the frame type/frame subtype field in the physical layer part of a PPDU frame, thereby determining whether to receive the data part of the PPDU frame. Specifically, the frame type/frame subtype information may be a feature sequence identifying the beacon frame, which is used for the zero-power-consumption STA to perform correlated reception to determine that the PPDU frame is the beacon frame. The frame format of the physical layer header part of the PPDU frame after adding the frame type/frame subtype information field is shown in FIG. 21 and the field is located before the data part.

The location of the frame type/frame subtype information field in the physical layer part of the PPDU frame is not unique. Other fields contained in the physical layer part of the PPDU frame are also not limited.

A different physical layer preamble may also be defined for identifying a target reception frame. For example, different from the fixed preamble sequence in the prior art, in this method, a plurality of preamble sequences may be defined, and the zero-power-consumption STA performs correlated reception on the preamble sequence and determines the preamble sequence, thereby determining whether the PPDU frame is a target reception frame. For example, the physical layer preamble of a PPDU frame carrying a beacon frame uses preamble 1, which is different from the PPDU frame carrying other types of frames.

In Embodiment 2, timing information is indicated in the physical layer part of a PPDU frame.

For the zero-power-consumption STA, the time of receiving a PPDU frame of a certain frame type cannot be determined by an accurate timer. In order to determine whether the currently received frame is a target PPDU frame that needs to be received, in embodiments of the present application, timing information is indicated in the physical layer part of the PPDU frame.

The timing information, i.e., the second indication information, may be timing information of coarser granularity compared with the information indicated by the timestamp in the prior art. Preferably, the timing information may indicate the arrival time of the TBTT or the listen interval. Therefore, the time granularity indicated by the timing information is the beacon interval instead of microseconds. The timing information may indicate a part of the bits in the timestamp field of the beacon frame, and does not need to indicate all 64 bits.

The frame format of the physical layer header part of the PPDU frame after adding the timing information field is shown in FIG. 22, and the field is located before the data part.

The location of the timing information field in the physical layer part of the PPDU frame is not unique. Other fields contained in the physical layer part of the PPDU frame are also not limited.

The timing information may indicate a beacon frame carrying specific content. In a case where the STA is in a power saving mode (PSM), the AP will buffer the downlink data, and the AP will send the downlink data only when the STA actively requests from the AP after the sleep state ends. The AP periodically broadcasts its buffer status to corresponding nodes through beacon frames, so that the nodes may know whether their data is buffered by the AP. After the sleep state ends, the node with the data buffered will perform a data request, otherwise it will continue to sleep. The AP carries a traffic indication map (TIM) through a beacon frame. The TIM is a traffic indication map based on a bitmap structure and is used to identify the buffer information of the AP. Each bit in the bitmap corresponds to an AID of a STA. If the bit is 1, it represents that the corresponding STA has data buffer, and if the bit is 0, it represents that the corresponding STA has no data buffer. The STA checks whether its corresponding bit position is 1 or 0, and then determines whether to send power save-poll (PS-Poll) frame request data. Moreover, some beacon frames carry DTIM, which indicates not only the buffered unicast information but also the buffered multicast information of the AP. The period of the beacon frame carrying DTIM is several times that of TBTT, i.e., among every certain number of beacon frames that are sent, one beacon frame carries DTIM, and the other beacon frames carry TIM. Therefore, the period of DTIM includes an integer number of beacon intervals. For the DTIM sent by the AP, the STA should be in the awake state to receive broadcast and multicast information, as well as unicast information. However, for TIM sent by the AP, the STA does not necessarily need to be awake to receive unicast information, which depends on the listen interval.

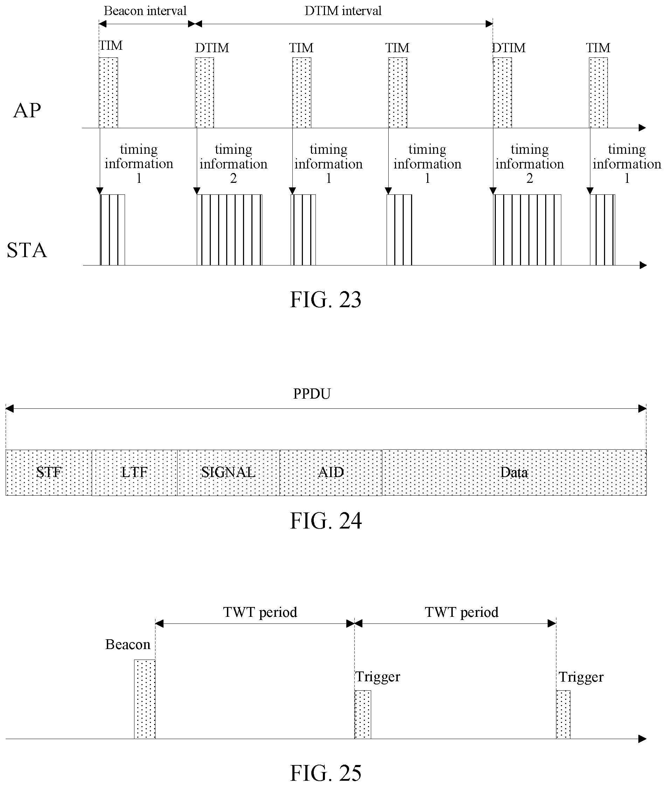

As shown in FIG. 23, a DTIM interval includes three beacon intervals. The zero-power-consumption STA needs to wake up for a period of time within the TBTT of the beacon frame carrying DTIM to receive broadcast and multicast frames, as well as unicast frames. However, the zero-power-consumption STA may not wake up within the TBTT of the beacon frame carrying TIM to save power. Therefore, timing information carried in the physical layer part of the PPDU frame corresponding to the beacon frame carrying DTIM may be different from timing information carried in the physical layer part of the PPDU frame corresponding to the beacon frame carrying TIM. As shown in FIG. 23, timing information 2 and timing information 1 are used to indicate the TBTT of whether the current beacon frame is a beacon frame carrying DTIM or a beacon frame carrying TIM. The zero-power-consumption STA determines whether to receive the data part of the beacon frame based on the timing information to obtain corresponding information. As shown in FIG. 23, in response that the zero-power-consumption STA detects timing information 1, the zero-power-consumption STA does not continue to receive the data part of the beacon frame and enters the sleep state after receiving the beacon frame. In response that the zero-power-consumption STA detects timing information 2, the zero-power-consumption STA determines that it is a beacon frame carrying DTIM, and remains in the awake state to receive the data part of the beacon frame and the buffered data of subsequent broadcast and multicast frames.

In Embodiment 3, the physical layer information part of a PPDU frame indicates an identification information of the zero-power-consumption STA.

The MAC header in the PPDU frame contains an address field, which is used to indicate a target reception user of the frame. Moreover, in PSM, each bit in the TIM of the beacon frame corresponds to an association identifier (AID) of a STA. The AID is in a range from 0 to 2007, and an AP can be associated with up to 2007 STAs. The location of AID = 0 is a reserved field, which is not allocated to STAs and is used to represent all multicasts and broadcasts. When a STA initiates an association request to an AP, the AP will respond with an association response frame. The AID is allocated in this process and notified to the STA. Moreover, for an S1G AP, a group AID may be allocated to a group of S1G STAs.

In embodiments of the present application, in order to enable the zero-power-consumption STA to receive a target PPDU frame at a target time, the identification information of the zero-power-consumption STA may be indicated in the physical layer information part of the target PPDU frame. Specifically, the identification information may be an AID or a group AID. After detecting the identification information in the physical layer information part of the PPDU frame, the zero-power-consumption STA receives the data part of the PPDU frame in response that the identification information corresponds to the identification of the zero-power-consumption STA its own, otherwise, the zero-power-consumption STA does not receive.

In an example, the frame format of the physical layer header part of the PPDU frame after adding an AID field is shown in FIG. 24. The AID field is located in the physical part and adjacent to the data part.

It can be understood that the location of the AID field in the physical layer part of the PPDU frame is not unique. Other fields contained in the physical layer part of the PPDU frame are also not limited.

The above embodiments 1 to 3 solve the problem of how to indicate the zero-power-consumption STA to receive a PPDU frame sent at a target time.

In Embodiment 4, a trigger frame corresponds to a time window corresponding to the zero-power-consumption STA.

In order to save power for STA, the wake-up and the reception and transmission of data of the STA are optimized accordingly. The TWT timed wake-up mechanism is used to support energy saving in large-scale IoT environments. In TWT, a time schedule is established between a terminal and an AP (the time schedule is negotiated between the STA and the AP), and the time schedule consists of TWT periods. Generally, a TWT period negotiated by the STA and the AP contains one or more beacon periods. After the period negotiated by the STA and the AP arrives, the STA wakes up, waits for a trigger frame sent by the AP and performs a data exchange. After the current transmission is completed, the STA returns to the sleep state. Each STA negotiates with the AP independently, and each STA has an individual TWT period. The AP may also group STAs based on the set TWT periods and connect to multiple STAs at one time, thereby improving energy saving efficiency.

TWT has three operation modes in total, which are: 1) individual TWT, 2) broadcast TWT, and 3) opportunistic PS.

The individual TWT is a TWT negotiated between AP and STA, and this TWT is determined by two modes of explicit and implicit.

### Explicit operation mode

In a present data frame exchange, the AP explicitly informs the STA of a next TWT period; and the STA wakes up at a new specified TWT period and perform data frame exchange with the AP again.

### Implicit operation mode

In a present data frame exchange, the AP does not inform the STA of a next TWT period; and the STA calculates the next TWT period by itself (by adding a specific time to the current TWT period). The STA wakes up at the TWT period calculated by itself and perform data frame exchange with the AP again.

For the broadcast TWT, the broadcast TWT mechanism is an operation mechanism managed by an AP. Under this mechanism, the TWT period is announced by the AP, and generally, the AP announces a present TWT period in each beacon frame. The STA wakes up after the TWT period arrives, and the AP sends a broadcast trigger frame. After the AP completes sending, the STA returns to the sleep state until the next broadcast TWT time arrives.

For the opportunistic PS, the opportunistic PS mode is similar to the previous two operation modes, but there is no negotiation process between the AP and nodes. The AP will publicly announce a TWT time in each beacon. Any STA may choose to wake up within this public TWT time and perform data frame exchange with the AP.

Regardless of the TWT mode and the indication mode of TWT time, a STA still needs a local timer to calculate the arrival of the TWT time. For a zero-power-consumption STA, since accurate timing information cannot be maintained, determining the arrival of TWT needs to rely on triggering of the AP.

In embodiments of the present application, in an aspect, TWT time is indicated by trigger information sent by an AP. A trigger frame may be defined to carry the trigger information and indicate target TWT time. As shown in FIG. 25, when the TWT arrives, the AP sends a trigger frame for indicating the arrival of TWT time to the zero-power-consumption STA. After receiving the trigger information, the zero-power-consumption STA may wake up to perform data frame exchange. Different from the trigger frame sent by the AP to trigger the STA to perform data exchange within the TWT, the trigger information in embodiments of the present application is used to indicate the arrival of the TWT time.

In an example, an NDP frame may be used as a trigger frame.

The main purpose of the NDP frame is to measure or carry control information, but not to carry data. The frame structure of the NDP frame mainly includes the physical layer preamble and the physical layer header, without the MAC frame header and MSDU. In an example, the structure of the NDP frame is shown in FIG. 18. The structure of the signal field of the NDP frame is shown in FIG. 19, where the NDP CMAC PPDU frame body part includes the NDP CMAC PPDU frame Type information and relevant control information. For example, the NDP CMAC PPDU frame Type indicates that the high NDP is CTS, and the control information carried by the NDP is CTS information.

In embodiments of the present application, in order to carry the trigger information indicating the TWT time through the NDP, a new NDP CMAC PPDU frame Type may be defined, and accordingly, the control information carried by the NDP is the trigger information indicating the TWT time.

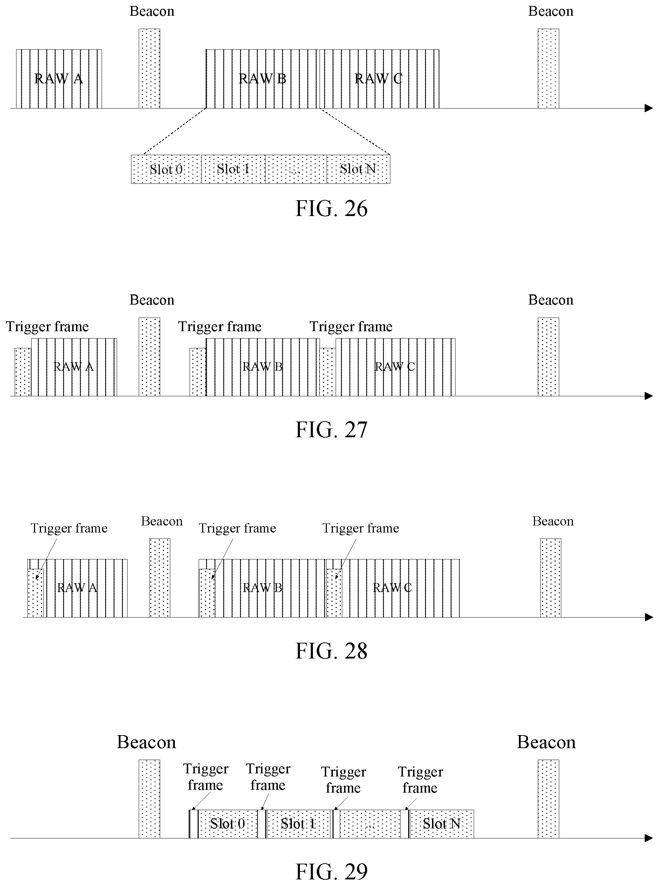

In embodiments of the present application, WiFi supports the scenario of a large number of nodes, and a RAW is introduced to reduce the probability of conflict. STAs are grouped by the RAW, and a specific node is only allowed to access the channel within a specific time to reduce channel contention. The description of the operation mechanism of the RAW is as described in FIG. 26, the channel time is divided into different time intervals, each interval is assigned to a RAW group, and each RAW group contains a certain number of nodes. The beacon RPS with RAW parameter information specifies the number of nodes contained in each group, the start time and the duration. As shown in FIG. 26, RAW A, RAW B, and RAW C are different RAWs and correspond to different RAW groups. Each RAW may be further evenly divided into multiple slots. Therefore, the RPS also contains the number of slots, the format of the slots, the time slot duration counter, and the like. In this way, the STAs are divided into multiple RAW groups, each RAW group is assigned with a time slot, and nodes belonging to the same time slot compete for access to the channel, so that collisions between nodes may be reduced to a certain extent. As shown in FIG. 26, RAW B is evenly divided into N slots, which are from time slot 1 to time slot N.

In embodiments of the present application, the trigger information is used to indicate the arrival of the RAW time. As shown in FIGS. 27 and 28, the trigger frame carrying the trigger information may be in the RAW or outside the RAW.

In embodiments of the present application, the trigger frame may also correspond a time slot of a RAW, i.e., a RAW time slot. For example, each trigger frame corresponds to one or more RAW slots. As shown in FIG. 29, for slot 1 to slot N, each trigger frame corresponds to one RAW time slot.

For the sending location of the trigger frame of the RAW, the trigger information may correspond to the end time of the RAW in addition to the start time of the RAW and is used to indicate the end time of the RAW to the zero-power-consumption STA.

It should be noted that, in order to illustrate the reception time of the zero-power-consumption STA receiving the target PPDU frame, examples are made in embodiments 1 to 3 with the reception of beacons. In embodiment 4, in order to illustrate the time when the zero-power-consumption STA obtains a target time interval, examples are made with the TWT and RAW. In fact, other types of PPDU frames and windows (time intervals) that require the STA to determine time based on timing information may all adopt the wireless communication methods provided in embodiments of the present application.

The zero-power-consumption STA cannot obtain an accurate clock, which affects the transmission and reception of data. The wireless communication method provided in embodiments of the present application may assist the zero-power-consumption STA in obtaining the target reception PPDU frame or the target time interval through the information sent by the AP, for correctly receiving and sending data, thereby achieving low complexity and low power consumption of the zero-power-consumption STA.

The preferred embodiments of the present application have been described above in detail with reference to the accompanying drawings. However, the present application is not limited to the specific details in the foregoing embodiments. Various simple modifications may be made to the technical solutions of the present application within the technical concept of the present application. These simple variants all fall within the protection scope of the present application. For example, the various specific technical features described in the foregoing specific embodiments may be combined with each other in any suitable manner without conflict. In order to avoid unnecessary repetition, the various possible combinations will not be described in the present application. As another example, the various embodiments of the present application may be arbitrarily combined, and the combinations should also be regarded as the contents disclosed in the present application as long as they do not violate the concept of the present application. As another example, on the premise of no conflict, the various embodiments and/or the technical features in the various embodiments described in the present application may be arbitrarily combined with the prior art, and the technical solution obtained after the combination should also fall within the protection scope of the present application.

It should also be understood that in the various method embodiments of the present application, the magnitude of the serial numbers of the above-mentioned processes does not mean the order of execution. The execution order of each process should be determined based on functions and internal logic, and should not constitute any limitation on the implementation process of the embodiments of the present application. In addition, in the embodiments of the present application, the terms "downlink", "uplink" and "sidelink" are used to indicate the transmission directions of signals or data. The "downlink" is used to indicate that the transmission direction of signals or data is a first direction from a station to a user device in a cell, the "uplink" is used to indicate that the transmission direction of signals or data is a second direction from a user device in a cell to a station, and the "sidelink" is used to indicate that the transmission direction of signals or data is a third direction from a user device 1 to a user device 2. For example, the "downlink signal" indicates that the transmission direction of the signal is the first direction. Furthermore, in the embodiments of the present application, the term "and/or" is merely an association relation for describing associated objects, representing that three relationships may exist. Specifically, A and/or B may represent three situations: A exists alone, both A and B exist, and B exists alone. In addition, the character "/" used herein generally indicates that the objects associated before and after are in an "or" relationship.

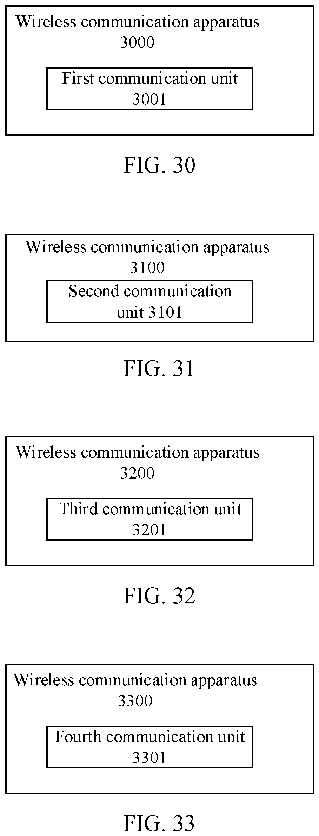

FIG. 30 is a schematic diagram showing a structure of a wireless communication apparatus provided in embodiments of the present application. The wireless communication apparatus is applied to a zero-power-consumption STA, and as shown in FIG. 30, the wireless communication apparatus 3000 includes:
a first communication unit 3001, configured to be indicated by an access point (AP) whether to receive a data part of a first physical layer protocol data unit (PPDU) frame.

In some embodiments, the first communication unit 3001 is further configured to receive first information sent by the AP. The first information is used to indicate the zero-power-consumption STA whether to receive the first PPDU frame, or the first information is used to indicate the zero-power-consumption STA whether to receive the data part of the first PPDU frame.

In some embodiments, the first information includes at least one of the followings:
first indication information, used to indicate a frame type of the first PPDU frame;
second indication information, used to indicate first time information, the first time information corresponding to a time of receiving the first PPDU frame; and
third indication information, used to indicate a receiving terminal of the first PPDU frame.

In some embodiments, in a case where the first indication information indicates that the frame type of the first PPDU frame is a target frame type, the first indication information is used to indicate the zero-power-consumption STA to receive the data part of the first PPDU frame.

In some embodiments, the first indication information includes one of: type information or subtype information.

In some embodiments, the first indication information is a first feature sequence, and the first feature sequence is a feature sequence that identifies the frame type of the first PPDU frame.

In some embodiments, the first indication information is a first physical preamble, and the first physical preamble is a physical layer preamble that identifies the frame type of the first PPDU frame.

In some embodiments, the first indication information is independent from the first PPDU frame.

In some embodiments, the first indication information is carried in the first PPDU frame.

In some embodiments, the first indication information is carried in a physical layer part of the first PPDU frame.

In some embodiments, the second indication information is used to indicate the zero-power-consumption STA to receive the data part of the first PPDU frame.

In some embodiments, the first time information corresponds to a first transmission time or a first time interval; the first transmission time is a sending time of the AP periodically sending the first PPDU frame, and the first time interval is a duration of a sleep state between two awake states of the zero-power-consumption STA.

In some embodiments, a time granularity of the first time information is a second time interval, and the second time interval is a sending interval of the AP sending the first PPDU frame.

In some embodiments, the second indication information is independent from the first PPDU frame.

In some embodiments, the second indication information is carried in the first PPDU frame.

In some embodiments, the second indication information is carried in a physical layer part of the first PPDU frame.

In some embodiments, information carried by the first PPDU frame is different, and corresponding second indication information is different.

In some embodiments, in a case where the third indication information indicates that the receiving terminal is the zero-power-consumption STA, the third indication information is used to indicate the zero-power-consumption STA to receive the data part of the first PPDU frame.

In some embodiments, the third indication information is an association identifier (AID) or a group AID.

In some embodiments, the third indication information is independent from the first PPDU frame.

In some embodiments, the third indication information is carried in the first PPDU frame.

In some embodiments, the third indication information is carried in a physical layer part of the first PPDU frame.

In some embodiments, the apparatus 3000 further includes:
a third communication unit, configured to receive second information sent by the AP, the second information being used to indicate an arrival of a first window.

In some embodiments, the second information is used to indicate second time information, and the second time information corresponds to the first window.

In some embodiments, the second information is used to indicate trigger information, and the trigger information is used to trigger the first window.

In some embodiments, the second information is carried in a second PPDU frame.

In some embodiments, the second PPDU frame is a null data PPDU frame.

In some embodiments, the first window is a target wake time (TWT) period.

In some embodiments, the first window is a first restricted access window (RAW) corresponding to the zero-power-consumption STA.

In some embodiments, the second PPDU frame is located in the first RAW or outside the first RAW, and the second PPDU frame is a PPDU frame carrying the second information.

In some embodiments, the second information corresponds a first time slot included in the first RAW, the first time slot corresponds to a first RAW group, and the first RAW group includes the zero-power-consumption STA.

FIG. 31 is a schematic diagram showing a structure of a wireless communication apparatus provided in embodiments of the present application. The wireless communication apparatus is applied to an AP, and as shown in FIG. 31, the wireless communication apparatus 3100 includes:
a second communication unit 3101, configured to indicate a zero-power-consumption STA whether to receive a data part of a first physical layer protocol data unit (PPDU) frame.

In some embodiments, the second communication unit 3101 is further configured to send first information to the zero-power-consumption STA. The first information is used to indicate the zero-power-consumption STA whether to receive the first PPDU frame, or the first information is used to indicate the zero-power-consumption STA whether to receive the data part of the first PPDU frame.

In some embodiments, the first information includes at least one of the followings:
first indication information, used to indicate a frame type of the first PPDU frame;
second indication information, used to indicate first time information, the first time information corresponding to a time of receiving the first PPDU frame; and
third indication information, used to indicate a receiving terminal of the first PPDU frame.

In some embodiments, in a case where the first indication information indicates that the frame type of the first PPDU frame is a target frame type, the first indication information is used to indicate the zero-power-consumption STA to receive the data part of the first PPDU frame.

In some embodiments, the first indication information includes one of: type information or subtype information.

In some embodiments, the first indication information is a first feature sequence, and the first feature sequence is a feature sequence that identifies the frame type of the first PPDU frame.

In some embodiments, the first indication information is a first physical preamble, and the first physical preamble is a physical layer preamble that identifies the frame type of the first PPDU frame.

In some embodiments, the first indication information is independent from the first PPDU frame.

In some embodiments, the first indication information is carried in the first PPDU frame.

In some embodiments, the first indication information is carried in a physical layer part of the first PPDU frame.

In some embodiments, the second indication information is used to indicate the zero-power-consumption STA to receive the data part of the first PPDU frame.

In some embodiments, the first time information corresponds to a first transmission time or a first time interval; the first transmission time is a sending time of the AP periodically sending the first PPDU frame, and the first time interval is a duration of a sleep state between two awake states of the zero-power-consumption STA.

In some embodiments, a time granularity of the first time information is a second time interval, and the second time interval is a sending interval of the AP sending the first PPDU frame.

In some embodiments, the second indication information is independent from the first PPDU frame.

In some embodiments, the second indication information is carried in the first PPDU frame.

In some embodiments, the second indication information is carried in a physical layer part of the first PPDU frame.

In some embodiments, information carried by the first PPDU frame is different, and corresponding second indication information is different.

In some embodiments, in a case where the third indication information indicates that the receiving terminal is the zero-power-consumption STA, the third indication information is used to indicate the zero-power-consumption STA to receive the data part of the first PPDU frame.

In some embodiments, the third indication information is an association identifier (AID) or a group AID.

In some embodiments, the third indication information is independent from the first PPDU frame.

In some embodiments, the third indication information is carried in the first PPDU frame.

In some embodiments, the third indication information is carried in a physical layer part of the first PPDU frame.

In some embodiments, the apparatus 3100 further includes:
a fourth communication unit, configured to send second information to the AP, the second information being used to indicate an arrival of a first window.

In some embodiments, the second information is used to indicate second time information, and the second time information corresponds to the first window.

In some embodiments, the second information is used to indicate trigger information, and the trigger information is used to trigger the first window.

In some embodiments, the second information is carried in a second PPDU frame.

In some embodiments, the second PPDU frame is a null data PPDU frame.

In some embodiments, the first window is a target wake time (TWT) period.

In some embodiments, the first window is a first restricted access window (RAW) corresponding to the zero-power-consumption STA.

In some embodiments, the second PPDU frame is located in the first RAW or outside the first RAW, and the second PPDU frame is a PPDU frame carrying the second information.

In some embodiments, the second information corresponds a first time slot included in the first RAW, the first time slot corresponds to a first RAW group, and the first RAW group includes the zero-power-consumption STA.

FIG. 32 is a schematic diagram showing a structure of a wireless communication apparatus provided in embodiments of the present application. The wireless communication apparatus is applied to a zero-power-consumption STA, and as shown in FIG. 32, the wireless communication apparatus 3200 includes:
a third communication unit 3201, configured to receive second information sent by an access point (AP), the second information being used to indicate an arrival of a first window.

In some embodiments, the second information is used to indicate second time information, and the second time information corresponds to the first window.

In some embodiments, the second information is used to indicate trigger information, and the trigger information is used to trigger the first window.

In some embodiments, the second information is carried in a second PPDU frame.

In some embodiments, the second PPDU frame is a null data PPDU frame.

In some embodiments, the first window is a target wake time (TWT) period.

In some embodiments, the first window is a first restricted access window (RAW) corresponding to the zero-power-consumption STA.

In some embodiments, the second PPDU frame is located in the first RAW or outside the first RAW, and the second PPDU frame is a PPDU frame carrying the second information.

In some embodiments, the second information corresponds a first time slot included in the first RAW, the first time slot corresponds to a first RAW group, and the first RAW group includes the zero-power-consumption STA.

In some embodiments, the apparatus 3200 further includes:
a first communication unit, configured to be indicated by the AP whether to receive a data part of a first physical layer protocol data unit (PPDU) frame.

In some embodiments, the first communication unit is further configured to receive first information sent by the AP. The first information is used to indicate the zero-power-consumption STA whether to receive the first PPDU frame, or the first information is used to indicate the zero-power-consumption STA whether to receive the data part of the first PPDU frame.

In some embodiments, the first information includes at least one of the followings:
first indication information, used to indicate a frame type of the first PPDU frame;
second indication information, used to indicate first time information, the first time information corresponding to a time of receiving the first PPDU frame; and
third indication information, used to indicate a receiving terminal of the first PPDU frame.

In some embodiments, in a case where the first indication information indicates that the frame type of the first PPDU frame is a target frame type, the first indication information is used to indicate the zero-power-consumption STA to receive the data part of the first PPDU frame.

In some embodiments, the first indication information includes one of: type information or subtype information.

In some embodiments, the first indication information is a first feature sequence, and the first feature sequence is a feature sequence that identifies the frame type of the first PPDU frame.

In some embodiments, the first indication information is a first physical preamble, and the first physical preamble is a physical layer preamble that identifies the frame type of the first PPDU frame.

In some embodiments, the first indication information is independent from the first PPDU frame.

In some embodiments, the first indication information is carried in the first PPDU frame.

In some embodiments, the first indication information is carried in a physical layer part of the first PPDU frame.

In some embodiments, the second indication information is used to indicate the zero-power-consumption STA to receive the data part of the first PPDU frame.

In some embodiments, the first time information corresponds to a first transmission time or a first time interval; the first transmission time is a sending time of the AP periodically sending the first PPDU frame, and the first time interval is a duration of a sleep state between two awake states of the zero-power-consumption STA.

In some embodiments, a time granularity of the first time information is a second time interval, and the second time interval is a sending interval of the AP sending the first PPDU frame.

In some embodiments, the second indication information is independent from the first PPDU frame.

In some embodiments, the second indication information is carried in the first PPDU frame.

In some embodiments, the second indication information is carried in a physical layer part of the first PPDU frame.

In some embodiments, information carried by the first PPDU frame is different, and corresponding second indication information is different.

In some embodiments, in a case where the third indication information indicates that the receiving terminal is the zero-power-consumption STA, the third indication information is used to indicate the zero-power-consumption STA to receive the data part of the first PPDU frame.

In some embodiments, the third indication information is an association identifier (AID) or a group AID.

In some embodiments, the third indication information is independent from the first PPDU frame.

In some embodiments, the third indication information is carried in the first PPDU frame.

In some embodiments, the third indication information is carried in a physical layer part of the first PPDU frame.

FIG. 33 is a schematic diagram showing a structure of a wireless communication apparatus provided in embodiments of the present application. The wireless communication apparatus is applied to an AP, and as shown in FIG. 33, the wireless communication apparatus 3300 includes:
a fourth communication unit 3301, configured to send second information to the AP, the second information being used to indicate an arrival of a first window.

In some embodiments, the second information is used to indicate second time information, and the second time information corresponds to the first window.

In some embodiments, the second information is used to indicate trigger information, and the trigger information is used to trigger the first window.

In some embodiments, the second information is carried in a second PPDU frame.

In some embodiments, the second PPDU frame is a null data PPDU frame.

In some embodiments, the first window is a target wake time (TWT) period.

In some embodiments, the first window is a first restricted access window (RAW) corresponding to the zero-power-consumption STA.

In some embodiments, the second PPDU frame is located in the first RAW or outside the first RAW, and the second PPDU frame is a PPDU frame carrying the second information.

In some embodiments, the second information corresponds a first time slot included in the first RAW, the first time slot corresponds to a first RAW group, and the first RAW group includes the zero-power-consumption STA.

In some embodiments, the apparatus 3300 further includes:
a second communication unit, configured to indicate the zero-power-consumption STA whether to receive a data part of a first physical layer protocol data unit (PPDU) frame.

In some embodiments, the second communication unit is further configured to send first information to the zero-power-consumption STA. The first information is used to indicate the zero-power-consumption STA whether to receive the first PPDU frame, or the first information is used to indicate the zero-power-consumption STA whether to receive the data part of the first PPDU frame.

In some embodiments, the first information includes at least one of the followings:
first indication information, used to indicate a frame type of the first PPDU frame;
second indication information, used to indicate first time information, the first time information corresponding to a time of receiving the first PPDU frame; and
third indication information, used to indicate a receiving terminal of the first PPDU frame.

In some embodiments, in a case where the first indication information indicates that the frame type of the first PPDU frame is a target frame type, the first indication information is used to indicate the zero-power-consumption STA to receive the data part of the first PPDU frame.

In some embodiments, the first indication information includes one of: type information or subtype information.

In some embodiments, the first indication information is a first feature sequence, and the first feature sequence is a feature sequence that identifies the frame type of the first PPDU frame.

In some embodiments, the first indication information is a first physical preamble, and the first physical preamble is a physical layer preamble that identifies the frame type of the first PPDU frame.

In some embodiments, the first indication information is independent from the first PPDU frame.

In some embodiments, the first indication information is carried in the first PPDU frame.

In some embodiments, the first indication information is carried in a physical layer part of the first PPDU frame.

In some embodiments, the second indication information is used to indicate the zero-power-consumption STA to receive the data part of the first PPDU frame.

In some embodiments, the first time information corresponds to a first transmission time or a first time interval; the first transmission time is a sending time of the AP periodically sending the first PPDU frame, and the first time interval is a duration of a sleep state between two awake states of the zero-power-consumption STA.

In some embodiments, a time granularity of the first time information is a second time interval, and the second time interval is a sending interval of the AP sending the first PPDU frame.

In some embodiments, the second indication information is independent from the first PPDU frame.

In some embodiments, the second indication information is carried in the first PPDU frame.

In some embodiments, the second indication information is carried in a physical layer part of the first PPDU frame.

In some embodiments, information carried by the first PPDU frame is different, and corresponding second indication information is different.

In some embodiments, in a case where the third indication information indicates that the receiving terminal is the zero-power-consumption STA, the third indication information is used to indicate the zero-power-consumption STA to receive the data part of the first PPDU frame.

In some embodiments, the third indication information is an association identifier (AID) or a group AID.

In some embodiments, the third indication information is independent from the first PPDU frame.

In some embodiments, the third indication information is carried in the first PPDU frame.

In some embodiments, the third indication information is carried in a physical layer part of the first PPDU frame.

Those skilled in the art should understand that the relevant description of the above wireless communication apparatuses in the embodiments of the present application can be understood with reference to the relevant description of the wireless communication methods in the embodiments of the present application.

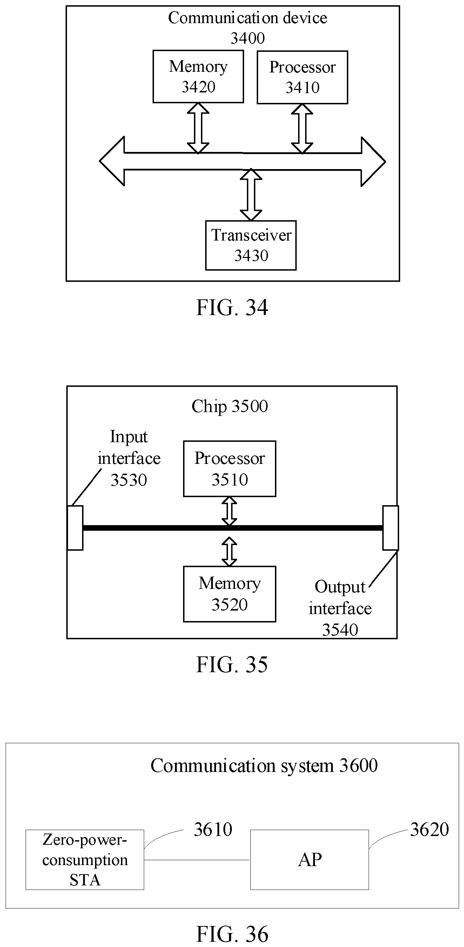

FIG. 34 is a schematic structural diagram of a communication device 3400 provided in embodiments of the present application. The communication device may be a zero-power-consumption STA or an AP. The communication device 3400 shown in FIG. 34 includes a processor 3410, and the processor 3410 can call and run a computer program from a memory to implement the method in the embodiments of the present application.

Optionally, as shown in FIG. 34, the communication device 3400 may further include a memory 3420. The processor 3410 can call and run the computer program from the memory 3420 to implement the method in the embodiments of the present application.

The memory 3420 may be an individual device independent from the processor 3410, or may be integrated into the processor 3410.

Optionally, as shown in FIG. 34, the communication device 3400 may further include a transceiver 3430, and the processor 3410 may control the transceiver 3430 to communicate with other devices. Specifically, the processor 3410 may control the transceiver 3430 to send information or data to other devices, or to receive information or data sent by other devices.

The transceiver 3430 may include a transmitter and a receiver. The transceiver 3430 may further include one or more antennas.

Optionally, the communication device 3400 is the AP in the embodiments of the present application, and the communication device 3400 can implement the corresponding processes implemented by the AP in various methods in the embodiments of the present application, which will not be repeated here for brevity.

Optionally, the communication device 3400 is the zero-power-consumption STA in the embodiments of the present application, and the communication device 3400 can implement the corresponding processes implemented by the zero-power-consumption STA in various methods in the embodiments of the present application, which will not be repeated here for brevity.

FIG. 35 is a schematic structural diagram of a chip in embodiments of the present application. The chip 3500 shown in FIG. 35 includes a processor 3510, and the processor 3510 can call and run a computer program from a memory to implement the method in the embodiments of the present application.

Optionally, as shown in FIG. 35, the chip 3500 may further include a memory 3520. The processor 3510 can call and run the computer program from the memory 3520 to implement the method in the embodiments of the present application.

The memory 3520 may be an individual device independent from the processor 3510, or may be integrated into the processor 3510.

Optionally, the chip 3500 may further include an input interface 3530. The processor 3510 can control the input interface 3530 to communicate with other devices or chips, and in particular, to obtain information or data sent by other devices or chips.

Optionally, the chip 3500 may further include an output interface 3540. The processor 3510 can control the output interface 3540 to communicate with other devices or chips, and in particular, to output information or data to other devices or chips.

Optionally, the chip can be applied to the AP in the embodiments of the present application, and the chip can implement the corresponding processes implemented by the AP in various methods in the embodiments of the present application, which will not be repeated here for brevity.

Optionally, the chip can be applied to the zero-power-consumption STA in the embodiments of the present application, and the chip can implement the corresponding processes implemented by the zero-power-consumption STA in various methods in the embodiments of the present application, which will not be repeated here for brevity.

It should be understood that the chip described in the embodiments of the present application may also be referred to as a system-level chip, a system chip, a chip system or a system-on-chip chip.

FIG. 36 is a schematic block diagram of a communication system 3600 provided in embodiments of the present application. As shown in FIG. 36, the communication system 3600 includes a zero-power-consumption STA 3610 and an AP 3620.

The zero-power-consumption STA 3610 can be used to implement the corresponding functions implemented by the zero-power-consumption STA in the above methods, and the AP 3620 can be used to implement the corresponding functions implemented by the AP in the above methods, which will not be repeated here for brevity.

It should be understood that the processor in the embodiments of the present application may be an integrated circuit chip with a capability for processing signals. In an implementation process, various steps of the method embodiments described above may be completed through an integrated logic circuit of hardware in a processor or instructions in a form of software. The above processor may be a general-purpose processor, a digital signal processor (DSP), an application specific integrated circuit (ASIC), a field programmable gate array (FPGA) or another programmable logic device, a discrete gate or transistor logic device, or a discrete hardware component. The processor may implement various methods, steps, and logic block diagrams disclosed in the embodiments of the present application. The general-purpose processor may be a microprocessor, or the processor may be any conventional processor. The steps of the methods disclosed in combination with the embodiments of the present application may be directly embodied by execution of a hardware decoding processor, or by execution of a combination of hardware and software modules in a decoding processor. The software module may be located in a storage medium commonly used in the art, such as a random access memory, a flash memory, a read-only memory, a programmable read-only memory or an electrically erasable programmable memory, or a register. The storage medium is located in a memory, and the processor reads information in the memory and completes the steps of the above methods in combination with hardware of the processor.

It will be appreciated that the memory in the embodiments of the present application may be a transitory memory or a non-transitory memory, or may include both transitory and non-transitory memories. The non-transitory memory may be a read-only memory (ROM), a programmable ROM (PROM), an erasable PROM (EPROM), an electrically EPROM (EEPROM), or a flash memory. The transitory memory may be a random access memory (RAM) which serves as an external cache. As an example, but not as a limitation, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that the memories of the systems and methods described herein are intended to include, but are not limited to, these and any other suitable types of memories.

It should be understood that the above memories are described as examples rather than limitations. For example, the memory in the embodiments of the present application may be a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), or a direct rambus RAM (DR RAM). That is to say, the memories in the embodiments of the present application are intended to include, but are not limited to, these and any other suitable types of memories.

Embodiments of the present application provide a computer-readable storage medium for storing a computer program.

Optionally, the computer-readable storage medium can be applied to the AP in the embodiments of the present application, and the computer program enables a computer to perform the corresponding processes implemented by the AP in various methods in the embodiments of the present application, which will not be repeated here for brevity.

Optionally, the computer-readable storage medium can be applied to the zero-power-consumption STA in the embodiments of the present application, and the computer program enables a computer to perform the corresponding processes implemented by the zero-power-consumption STA in various methods in the embodiments of the present application, which will not be repeated here for brevity.

Embodiments of the present application provide a computer program product, which includes computer program instructions.

Optionally, the computer program product can be applied to the AP in the embodiments of the present application, and the computer program instructions enable a computer to perform the corresponding processes implemented by the AP in various methods in the embodiments of the present application, which will not be repeated here for brevity.

Optionally, the computer program product can be applied to the zero-power-consumption STA in the embodiments of the present application, and the computer program instructions enable a computer to perform the corresponding processes implemented by the zero-power-consumption STA in various methods in the embodiments of the present application, which will not be repeated here for brevity.

Embodiments of the present application provide a computer program.

Optionally, the computer program can be applied to the AP in the embodiments of the present application. When running on a computer, the computer program enables the computer to perform the corresponding processes implemented by the AP in various methods in the embodiments of the present application, which will not be repeated here for brevity.

Optionally, the computer program can be applied to the zero-power-consumption STA in the embodiments of the present application. When running on a computer, the computer program enables the computer to perform the corresponding processes implemented by the zero-power-consumption STA in various methods in the embodiments of the present application, which will not be repeated here for brevity.

Those of ordinary skills in the art will recognize that units and algorithm steps of various examples described in combination with the embodiments disclosed herein can be implemented in electronic hardware, or a combination of computer software and electronic hardware. Whether these functions are implemented in a form of hardware or software depends on a specific application and a design constraint of a technical solution. Those skilled in the art may use different methods to implement the described functions for each specific application, but such implementation should not be considered to be beyond the scope of the present application.

Those skilled in the art may clearly understand that, for convenience and conciseness of description, specific working processes of the system, apparatus, and unit described above may refer to corresponding processes in the aforementioned method embodiments, and details will not be repeated here.

In several embodiments provided in the present application, it should be understood that the disclosed system, apparatus, and method may be implemented in other ways. For example, the apparatus embodiments described above are only illustrative. For example, the division of the units is only a logical function division, and there may be other division manners in actual implementation. For example, multiple units or components may be combined or integrated into another system, or some features may be ignored or not executed. In addition, coupling or direct coupling or communication connection shown or discussed between each other may be indirect coupling or communication connection between the apparatuses or units via some interfaces, which may be electrical, mechanical, or in other forms.

The units described as separate components may be or may be not physically separated, and the component shown as a unit may be or may be not a physical unit (that is, it may be located in one place or may be distributed on multiple network units). Some or all of units may be selected according to actual needs to achieve purposes of technical solutions of the embodiments.

In addition, various functional units in various embodiments of the present application may be integrated in one processing unit, or various units may be physically present separately, or two or more units may be integrated in one unit.

The functions, if implemented in a form of software functional units and sold or used as an independent product, may be stored in a computer-readable storage medium. With such understanding, the technical solutions of the present application may be embodied in the form of a software product in essence, or a part of the technical solutions that contributes to the prior art or a part of the technical solutions may be embodied in the form of a software product. The computer software product is stored in one storage medium including a number of instructions for causing one computer device (which may be a personal computer, a server, or a network device) to perform all or some of the steps of the methods in the embodiments of the present application. The aforementioned storage medium includes various medium capable of storing program codes, such as a U disk, a mobile hard disk, a read-only memory (ROM), a random access memory (RAM), a magnetic disk, and an optical disk.

The foregoing descriptions are merely specific implementations of the present disclosure, but the protection scope of the present application is not limited thereto. Variations or replacements that any person skilled in the art could readily conceive of within the technical scope disclosed in the present application shall be included in the protection scope of the present application. Therefore, the protection scope of the present application should be subject to the protection scope of the claims.

## Claims

1. A wireless communication method, comprising:
a zero-power-consumption station (STA) being indicated by an access point (AP) whether to receive a data part of a first physical layer protocol data unit (PPDU) frame.

2. The method according to claim 1, wherein the zero-power-consumption STA being indicated by the AP whether to receive the data part of the first PPDU frame, comprises:
receiving, by the zero-power-consumption station (STA), first information sent by the access point (AP), the first information being used to indicate the zero-power-consumption STA whether to receive the first PPDU frame, or the first information being used to indicate the zero-power-consumption STA whether to receive the data part of the first PPDU frame.

3. The method according to claim 2, wherein the first information comprises at least one of followings, which comprise:
first indication information, used to indicate a frame type of the first PPDU frame;
second indication information, used to indicate first time information, wherein the first time information corresponds to a time of receiving the first PPDU frame; and
third indication information, used to indicate a receiving terminal of the first PPDU frame.

4. The method according to claim 3, wherein in a case where the first indication information indicates that the frame type of the first PPDU frame is a target frame type, the first indication information is used to indicate the zero-power-consumption STA to receive the data part of the first PPDU frame.

5. The method according to claim 3 or 4, wherein the first indication information comprises one of: type information or subtype information.

6. The method according to claim 3 or 4, wherein the first indication information is a first feature sequence, and the first feature sequence is a feature sequence that identifies the frame type of the first PPDU frame.

7. The method according to claim 3 or 4, wherein the first indication information is a first physical preamble, and the first physical preamble is a physical layer preamble that identifies the frame type of the first PPDU frame.

8. The method according to any one of claims 3 to 7, wherein the first indication information is independent from the first PPDU frame.

9. The method according to any one of claims 3 to 7, wherein the first indication information is carried in the first PPDU frame.

10. The method according to claim 9, wherein the first indication information is carried in a physical layer part of the first PPDU frame.

11. The method according to claim 3, wherein the second indication information is used to indicate the zero-power-consumption STA to receive the data part of the first PPDU frame.

12. The method according to claim 3 or 11, wherein the first time information corresponds to a first transmission time or a first time interval; the first transmission time is a sending time of the AP periodically sending the first PPDU frame, and the first time interval is a duration of a sleep state between two awake states of the zero-power-consumption STA.

13. The method according to claim 3, 11 or 12, wherein a time granularity of the first time information is a second time interval, and the second time interval is a sending interval of the AP sending the first PPDU frame.

14. The method according to any one of claims 3 and 11 to 13, wherein the second indication information is independent from the first PPDU frame.

15. The method according to any one of claims 3 and 11 to 13, wherein the second indication information is carried in the first PPDU frame.

16. The method according to claim 15, wherein the second indication information is carried in a physical layer part of the first PPDU frame.

17. The method according to any one of claims 3 and 11 to 16, wherein information carried by the first PPDU frame is different, and corresponding second indication information is different.

18. The method according to claim 3, wherein in a case where the third indication information indicates that the receiving terminal is the zero-power-consumption STA, the third indication information is used to indicate the zero-power-consumption STA to receive the data part of the first PPDU frame.

19. The method according to claim 3 or 18, wherein the third indication information is an association identifier (AID) or a group AID.

20. The method according to claim 3, 18 or 19, wherein the third indication information is independent from the first PPDU frame.

21. The method according to claim 3, 18 or 19, wherein the third indication information is carried in the first PPDU frame.

22. The method according to claim 21, wherein the third indication information is carried in a physical layer part of the first PPDU frame.

23. The method according to any one of claims 1 to 22, wherein the method further comprises:
receiving, by the zero-power-consumption STA, second information sent by the AP, the second information being used to indicate an arrival of a first window.

24. The method according to claim 23, wherein the second information is used to indicate second time information, and the second time information corresponds to the first window.

25. The method according to claim 23, wherein the second information is used to indicate trigger information, and the trigger information is used to trigger the first window.

26. The method according to any one of claims 23 to 25, wherein the second information is carried in a second PPDU frame.

27. The method according to claim 26, wherein the second PPDU frame is a null data PPDU frame.

28. The method according to any one of claims 23 to 27, wherein the first window is a target wake time (TWT) period.

29. The method according to any one of claims 23 to 27, wherein the first window is a first restricted access window (RAW) corresponding to the zero-power-consumption STA.

30. The method according to claim 29, wherein the second PPDU frame is located in the first RAW or outside the first RAW, and the second PPDU frame is a PPDU frame carrying the second information.

31. The method according to any one of claims 29 to 30, wherein the second information corresponds a first time slot comprised in the first RAW, the first time slot corresponds to a first RAW group, and the first RAW group comprises the zero-power-consumption STA.

32. A wireless communication method, comprising:
indicating, by an access point (AP), a zero-power-consumption station (STA) whether to receive a data part of a first physical layer protocol data unit (PPDU) frame.

33. The method according to claim 32, wherein indicating, by the AP, the zero-power-consumption STA whether to receive the data part of the first PPDU frame, comprises:
sending, by the AP, first information to the zero-power-consumption STA, the first information being used to indicate the zero-power-consumption STA whether to receive the first PPDU frame, or the first information being used to indicate the zero-power-consumption STA whether to receive the data part of the first PPDU frame.

34. The method according to claim 33, wherein the first information comprises at least one of followings, which comprise:
first indication information, used to indicate a frame type of the first PPDU frame;
second indication information, used to indicate first time information, wherein the first time information corresponds to a time of receiving the first PPDU frame; and
third indication information, used to indicate a receiving terminal of the first PPDU frame.

35. The method according to claim 34, wherein in a case where the first indication information indicates that the frame type of the first PPDU frame is a target frame type, the first indication information is used to indicate the zero-power-consumption STA to receive the data part of the first PPDU frame.

36. The method according to claim 34 or 35, wherein the first indication information comprises one of: type information or subtype information.

37. The method according to claim 34 or 35, wherein the first indication information is a first feature sequence, and the first feature sequence is a feature sequence that identifies the frame type of the first PPDU frame.

38. The method according to claim 34 or 35, wherein the first indication information is a first physical preamble, and the first physical preamble is a physical layer preamble that identifies the frame type of the first PPDU frame.

39. The method according to any one of claims 34 to 38, wherein the first indication information is independent from the first PPDU frame.

40. The method according to any one of claims 34 to 38, wherein the first indication information is carried in the first PPDU frame.

41. The method according to claim 40, wherein the first indication information is carried in a physical layer part of the first PPDU frame.

42. The method according to claim 34, wherein the second indication information is used to indicate the zero-power-consumption STA to receive the data part of the first PPDU frame.

43. The method according to claim 34 or 42, wherein the first time information corresponds to a first transmission time or a first time interval; the first transmission time is a sending time of the AP periodically sending the first PPDU frame, and the first time interval is a duration of a sleep state between two awake states of the zero-power-consumption STA.

44. The method according to claim 34, 42 or 43, wherein a time granularity of the first time information is a second time interval, and the second time interval is a sending interval of the AP sending the first PPDU frame.

45. The method according to any one of claims 34 and 42 to 44, wherein the second indication information is independent from the first PPDU frame.

46. The method according to any one of claims 34 and 42 to 44, wherein the second indication information is carried in the first PPDU frame.

47. The method according to claim 46, wherein the second indication information is carried in a physical layer part of the first PPDU frame.

48. The method according to any one of claims 34 and 42 to 47, wherein information carried by the first PPDU frame is different, and corresponding second indication information is different.

49. The method according to claim 34, wherein in a case where the third indication information indicates that the receiving terminal is the zero-power-consumption STA, the third indication information is used to indicate the zero-power-consumption STA to receive the data part of the first PPDU frame.

50. The method according to claim 34 or 49, wherein the third indication information is an association identifier (AID) or a group AID.

51. The method according to claim 34, 49 or 50, wherein the third indication information is independent from the first PPDU frame.

52. The method according to claim 34, 49 or 50, wherein the third indication information is carried in the first PPDU frame.

53. The method according to claim 52, wherein the third indication information is carried in a physical layer part of the first PPDU frame.

54. The method according to any one of claims 32 to 53, wherein the method further comprises:
sending, by the AP, second information to the zero-power-consumption STA, the second information being used to indicate an arrival of a first window.

55. The method according to claim 54, wherein the second information is used to indicate second time information, and the second time information corresponds to the first window.

56. The method according to claim 54, wherein the second information is used to indicate trigger information, and the trigger information is used to trigger the first window.

57. The method according to any one of claims 54 to 56, wherein the second information is carried in a second PPDU frame.

58. The method according to claim 57, wherein the second PPDU frame is a null data PPDU frame.

59. The method according to any one of claims 54 to 58, wherein the first window is a target wake time (TWT) period.

60. The method according to any one of claims 54 to 58, wherein the first window is a first restricted access window (RAW) corresponding to the zero-power-consumption STA.

61. The method according to claim 60, wherein the second PPDU frame is located in the first RAW or outside the first RAW, and the second PPDU frame is a PPDU frame carrying the second information.

62. The method according to any one of claims 60 to 61, wherein the second information corresponds a first time slot comprised in the first RAW, the first time slot corresponds to a first RAW group, and the first RAW group comprises the zero-power-consumption STA.

63. A wireless communication method, comprising:
receiving, by a zero-power-consumption station (STA), second information sent by an access point (AP), the second information being used to indicate an arrival of a first window.

64. The method according to claim 63, wherein the second information is used to indicate second time information, and the second time information corresponds to the first window.

65. The method according to claim 63, wherein the second information is used to indicate trigger information, and the trigger information is used to trigger the first window.

66. The method according to any one of claims 63 to 65, wherein the second information is carried in a second PPDU frame.

67. The method according to claim 66, wherein the second PPDU frame is a null data PPDU frame.

68. The method according to any one of claims 63 to 67, wherein the first window is a target wake time (TWT) period.

69. The method according to any one of claims 63 to 67, wherein the first window is a first restricted access window (RAW) corresponding to the zero-power-consumption STA.

70. The method according to claim 69, wherein the second PPDU frame is located in the first RAW or outside the first RAW, and the second PPDU frame is a PPDU frame carrying the second information.

71. The method according to claim 69 or 70, wherein the second information corresponds a first time slot comprised in the first RAW, the first time slot corresponds to a first RAW group, and the first RAW group comprises the zero-power-consumption STA.

72. The method according to any one of claims 63 to 71, wherein the method further comprises:
the zero-power-consumption STA being indicated by the AP whether to receive a data part of a first physical layer protocol data unit (PPDU) frame.

73. The method according to claim 72, wherein the zero-power-consumption STA being indicated by the AP whether to receive the data part of the first PPDU frame, comprises:
receiving, by the zero-power-consumption STA, first information sent by the AP, the first information being used to indicate the zero-power-consumption STA whether to receive the first PPDU frame, or the first information being used to indicate the zero-power-consumption STA whether to receive the data part of the first PPDU frame.

74. The method according to claim 73, wherein the first information comprises at least one of followings, which comprise:
first indication information, used to indicate a frame type of the first PPDU frame;
second indication information, used to indicate first time information, wherein the first time information corresponds to a time of receiving the first PPDU frame; and
third indication information, used to indicate a receiving terminal of the first PPDU frame.

75. The method according to claim 74, wherein in a case where the first indication information indicates that the frame type of the first PPDU frame is a target frame type, the first indication information is used to indicate the zero-power-consumption STA to receive the data part of the first PPDU frame.

76. The method according to claim 74 or 75, wherein the first indication information comprises one of: type information or subtype information.

77. The method according to claim 74 or 75, wherein the first indication information is a first feature sequence, and the first feature sequence is a feature sequence that identifies the frame type of the first PPDU frame.

78. The method according to claim 74 or 75, wherein the first indication information is a first physical preamble, and the first physical preamble is a physical layer preamble that identifies the frame type of the first PPDU frame.

79. The method according to any one of claims 74 to 78, wherein the first indication information is independent from the first PPDU frame.

80. The method according to any one of claims 74 to 78, wherein the first indication information is carried in the first PPDU frame.

81. The method according to claim 80, wherein the first indication information is carried in a physical layer part of the first PPDU frame.

82. The method according to claim 74, wherein the second indication information is used to indicate the zero-power-consumption STA to receive the data part of the first PPDU frame.

83. The method according to claim 74 or 82, wherein the first time information corresponds to a first transmission time or a first time interval; the first transmission time is a sending time of the AP periodically sending the first PPDU frame, and the first time interval is a duration of a sleep state between two awake states of the zero-power-consumption STA.

84. The method according to claim 74, 82 or 83, wherein a time granularity of the first time information is a second time interval, and the second time interval is a sending interval of the AP sending the first PPDU frame.

85. The method according to any one of claims 74 and 82 to 84, wherein the second indication information is independent from the first PPDU frame.

86. The method according to any one of claims 74 and 82 to 84, wherein the second indication information is carried in the first PPDU frame.

87. The method according to claim 86, wherein the second indication information is carried in a physical layer part of the first PPDU frame.

88. The method according to any one of claims 74 and 82 to 87, wherein information carried by the first PPDU frame is different, and corresponding second indication information is different.

89. The method according to claim 74, wherein in a case where the third indication information indicates that the receiving terminal is the zero-power-consumption STA, the third indication information is used to indicate the zero-power-consumption STA to receive the data part of the first PPDU frame.

90. The method according to claim 74 or 89, wherein the third indication information is an association identifier (AID) or a group AID.

91. The method according to claim 74, 89 or 90, wherein the third indication information is independent from the first PPDU frame.

92. The method according to claim 74, 89 or 90, wherein the third indication information is carried in the first PPDU frame.

93. The method according to claim 92, wherein the third indication information is carried in a physical layer part of the first PPDU frame.

94. A wireless communication method, comprising:
sending, by an access point (AP), second information to a zero-power-consumption station (STA), the second information being used to indicate an arrival of a first window.

95. The method according to claim 94, wherein the second information is used to indicate second time information, and the second time information corresponds to the first window.

96. The method according to claim 94, wherein the second information is used to indicate trigger information, and the trigger information is used to trigger the first window.

97. The method according to any one of claims 94 to 96, wherein the second information is carried in a second PPDU frame.

98. The method according to claim 97, wherein the second PPDU frame is a null data PPDU frame.

99. The method according to any one of claims 94 to 98, wherein the first window is a target wake time (TWT) period.

100. The method according to any one of claims 94 to 98, wherein the first window is a first restricted access window (RAW) corresponding to the zero-power-consumption STA.

101. The method according to claim 100, wherein the second PPDU frame is located in the first RAW or outside the first RAW, and the second PPDU frame is a PPDU frame carrying the second information.

102. The method according to any one of claims 100 to 101, wherein the second information corresponds a first time slot comprised in the first RAW, the first time slot corresponds to a first RAW group, and the first RAW group comprises the zero-power-consumption STA.

103. The method according to any one of claims 84 to 102, wherein the method further comprises:
indicating, by the AP, the zero-power-consumption STA whether to receive a data part of a first physical layer protocol data unit (PPDU) frame.

104. The method according to claim 103, wherein indicating, by the AP, the zero-power-consumption STA whether to receive the data part of the first PPDU frame, comprises:
sending, by the AP, first information to the zero-power-consumption STA, the first information being used to indicate the zero-power-consumption STA whether to receive the first PPDU frame, or the first information being used to indicate the zero-power-consumption STA whether to receive the data part of the first PPDU frame.

105. The method according to claim 104, wherein the first information comprises at least one of followings, which comprise:
first indication information, used to indicate a frame type of the first PPDU frame;
second indication information, used to indicate first time information, wherein the first time information corresponds to a time of receiving the first PPDU frame; and
third indication information, used to indicate a receiving terminal of the first PPDU frame.

106. The method according to claim 105, wherein in a case where the first indication information indicates that the frame type of the first PPDU frame is a target frame type, the first indication information is used to indicate the zero-power-consumption STA to receive the data part of the first PPDU frame.

107. The method according to claim 105 or 106, wherein the first indication information comprises one of: type information or subtype information.

108. The method according to claim 105 or 106, wherein the first indication information is a first feature sequence, and the first feature sequence is a feature sequence that identifies the frame type of the first PPDU frame.

109. The method according to claim 105 or 106, wherein the first indication information is a first physical preamble, and the first physical preamble is a physical layer preamble that identifies the frame type of the first PPDU frame.

110. The method according to any one of claims 105 to 109, wherein the first indication information is independent from the first PPDU frame.

111. The method according to any one of claims 105 to 109, wherein the first indication information is carried in the first PPDU frame.

112. The method according to claim 111, wherein the first indication information is carried in a physical layer part of the first PPDU frame.

113. The method according to claim 105, wherein the second indication information is used to indicate the zero-power-consumption STA to receive the data part of the first PPDU frame.

114. The method according to claim 105 or 113, wherein the first time information corresponds to a first transmission time or a first time interval; the first transmission time is a sending time of the AP periodically sending the first PPDU frame, and the first time interval is a duration of a sleep state between two awake states of the zero-power-consumption STA.

115. The method according to claim 105, 113 or 114, wherein a time granularity of the first time information is a second time interval, and the second time interval is a sending interval of the AP sending the first PPDU frame.

116. The method according to any one of claims 105 and 113 to 115, wherein the second indication information is independent from the first PPDU frame.

117. The method according to any one of claims 105 and 113 to 115, wherein the second indication information is carried in the first PPDU frame.

118. The method according to claim 117, wherein the second indication information is carried in a physical layer part of the first PPDU frame.

119. The method according to any one of claims 105 and 113 to 118, wherein information carried by the first PPDU frame is different, and corresponding second indication information is different.

120. The method according to claim 105, wherein in a case where the third indication information indicates that the receiving terminal is the zero-power-consumption STA, the third indication information is used to indicate the zero-power-consumption STA to receive the data part of the first PPDU frame.

121. The method according to claim 105 or 120, wherein the third indication information is an association identifier (AID) or a group AID.

122. The method according to claim 105, 120 or 121, wherein the third indication information is independent from the first PPDU frame.

123. The method according to claim 105, 120 or 121, wherein the third indication information is carried in the first PPDU frame.

124. The method according to claim 123, wherein the third indication information is carried in a physical layer part of the first PPDU frame.

125. A wireless communication apparatus, applied to a zero-power-consumption station (STA) and comprising:
a first communication unit, configured to be indicated by an access point (AP) whether to receive a data part of a first physical layer protocol data unit (PPDU) frame.

126. A wireless communication apparatus, applied to an access point (AP) and comprising:
a second communication unit, configured to indicate a zero-power-consumption station (STA) whether to receive a data part of a first physical layer protocol data unit (PPDU) frame.

127. A wireless communication apparatus, applied to a zero-power-consumption station (STA) and comprising:
a third communication unit, configured to receive second information sent by an access point (AP), the second information being used to indicate an arrival of a first window.

128. A wireless communication apparatus, applied to an access point (AP) and comprising:
a fourth communication unit, configured to send second information to a zero-power-consumption station (STA), the second information being used to indicate an arrival of a first window.

129. A communication device, comprising a processor and a memory, wherein the memory is configured to store a computer program, and the processor is configured to call and run the computer program stored in the memory to perform the method according to any one of claims 1 to 31, or perform the method according to any one of claims 32 to 62, or perform the method according to any one of claims 63 to 93, or perform the method according to any one of claims 94 to 124.

130. A chip, comprising a processor, configured to call and run a computer program from a memory to cause a device installed with the chip to perform the method according to any one of claims 1 to 31, or perform the method according to any one of claims 32 to 62, or perform the method according to any one of claims 63 to 93, or perform the method according to any one of claims 94 to 124.

131. A computer-readable storage medium, configured to store a computer program, wherein the computer program causes a computer to perform the method according to any one of claims 1 to 31, or perform the method according to any one of claims 32 to 62, or perform the method according to any one of claims 63 to 93, or perform the method according to any one of claims 94 to 124.

132. A computer program product, comprising computer program instructions, wherein the computer program instructions cause a computer to perform the method according to any one of claims 1 to 31, or perform the method according to any one of claims 32 to 62, or perform the method according to any one of claims 63 to 93, or perform the method according to any one of claims 94 to 124.

133. A computer program, wherein the computer program causes a computer to perform the method according to any one of claims 1 to 31, or perform the method according to any one of claims 32 to 62, or perform the method according to any one of claims 63 to 93, or perform the method according to any one of claims 94 to 124.
